# EUROPEAN PATENT APPLICATION

(11) **EP 3 517 899 A1**
(43) Date of publication of application: **31.07.2019**
(21) Application number: 17907347.3
(22) Date of filing: 12.12.2017
(51) Int. Cl.: G01F 1/58

(54) **ELECTROMAGNETIC FLOWMETER**

(30) Priority: 28.04.2017 JP 2017089704; 28.04.2017 JP 2017089705; 28.04.2017 JP 2017089706; 28.04.2017 JP 2017089707; 28.04.2017 JP 2017089708; 28.04.2017 JP 2017089709; 28.04.2017 JP 2017089710; 28.04.2017 JP 2017089711
(71) Applicant: Aichi Tokei Denki Co., Ltd., Nagoya-shi, Aichi 456-8691 (JP)
(72) Inventor: KIMURA Koichi, Nagoya-shi Aichi 456-8691 (JP); ITO Hisao, Nagoya-shi Aichi 456-8691 (JP); SUZUKI Hideyuki, Nagoya-shi Aichi 456-8691 (JP); SAKAI Ryo, Nagoya-shi Aichi 456-8691 (JP)
(74) Representative: Kramer Barske Schmidtchen Patentanwälte PartG mbB
(86) International application number: PCT/JP2017/044593
(87) International publication number: WO 2018/198418

(57) **Abstract**

[Object] To provide an electromagnetic flowmeter with higher measurement precision than that of the conventional one.

[Solving Means] The electromagnetic flowmeter 10 of the present invention includes: a flow path housing 20 having a measurement flow path 20R; a pair of electrode accommodating holes 35 formed in the flow path housing 20 and communicating with the measurement flow path 20R in a direction intersecting a magnetic field; a pair of sensing electrodes 40 fitted in the pair of electrode accommodating holes 35; a seal member 36 providing a seal between an inner surface of each electrode accommodating hole 35 and an outer surface of each of the sensing electrodes 40; a submersion distal-end part 40H of each sensing electrode 40 located closer to the measurement flow path 20R than the seal member 36; a pair of submersion chambers 35H that are parts of the pair of electrode accommodating holes 35 each located closer to the measurement flow path 20R than the seal member 36 and accommodating the submersion distal-end part 40H; and an outflow/inflow port 35A provided to the submersion chamber 35H such as to open to an inner face of the measurement flow path 20R and allowing water to flow in and out in accordance with presence and absence of water inside the measurement flow path 20R, so that the submersion distal-end part 40H is entirely immersed in water inside the submersion chamber 35H when the measurement flow path 20R is filled with water.

## Description

### TECHNICAL FIELD

The present invention relates to an electromagnetic flowmeter that measures the flow rate of water.

### BACKGROUND ART

Recent years have found widespread use of electromagnetic flowmeters in place of turbine flow meters (for example, Patent Literature 1).

### RELATED ART DOCUMENTS

### PATENT DOCUMENTS

Patent Document 1: Japanese Unexamined Patent Application Publication No. JP-5-99715 A (FIG. 1)

### SUMMARY OF INVENTION

### PROBLEMS TO BE SOLVED BY THE INVENTION

For wider use of electromagnetic flowmeters, however, a higher measurement precision is desired.

In view of the circumstance noted above, an object of the present invention is to provide an electromagnetic flowmeter with higher measurement precision than that of the conventional one.

### MEANS FOR SOLVING THE PROBLEMS

An electromagnetic flowmeter according to one aspect of the present invention devised to achieve the object noted above includes: a flow path housing having a measurement flow path in which water flows under a magnetic field; a pair of electrode accommodating holes formed in the flow path housing and communicating with the measurement flow path in a direction intersecting the magnetic field; a pair of sensing electrodes fitted in the pair of electrode accommodating holes to detect a potential difference between two points inside the measurement flow path; a seal member providing a seal between an inner surface of each of the electrode accommodating holes and an outer surface of each of the sensing electrodes; a submersion distal-end part of each of the sensing electrodes located closer to the measurement flow path than the seal member; a pair of submersion chambers that are parts of the pair of electrode accommodating holes each located closer to the measurement flow path than the seal member and accommodating the submersion distal-end part; and an outflow/inflow port provided in each of the submersion chambers such as to open to an inner face of the measurement flow path and allowing water to flow in and out in accordance with presence and absence of water inside the measurement flow path, so that the submersion distal-end part is entirely immersed in water inside the submersion chamber when the measurement flow path is filled with water.

### BRIEF DESCRIPTION OF DRAWINGS

FIG. 1 is a perspective view of an electromagnetic flowmeter according to a first embodiment of the present invention.
FIG. 2 is an exploded perspective view of a case as seen from above.
FIG. 3 is a side view of a meter body.
FIG. 4 is a backside cross-sectional view of the meter body.
FIG. 5 is a perspective view of a flow path housing.
FIG. 6 is a top cross-sectional view of the flow path housing.
FIG. 7 is an enlarged side view of the vicinity of a measurement part of the flow path housing.
FIG. 8 is a partially broken perspective view of the flow path housing.
FIG. 9 is a partially broken perspective view of the vicinity of the measurement part of the flow path housing.
FIG. 10 is a front cross-sectional view of the vicinity of the measurement part of the flow path housing.
FIG. 11(A) is an enlarged top cross-sectional view of distal ends of a sensing electrode and an electrode accommodating hole, and FIG. 11(B) is a side view of the sensing electrode and electrode accommodating hole as viewed from inside of the measurement part.
FIG. 12 is a perspective view of the sensing electrode, an electrode fixing member, and a wire connecting member.
FIG. 13 is a perspective view of the electrode fixing member with the sensing electrode passed therethrough.
FIG. 14 is a perspective view of a pair of yokes.
FIG. 15 is a side cross-sectional view of a control unit case.
FIG. 16 is a plan view of a meter body with a fitting lid and an antenna substrate removed therefrom.
FIG. 17 is a plan view of the meter body with the fitting lid removed therefrom.
FIG. 18 is an exploded perspective view of the case as seen from below.
FIG. 19 is a side cross-sectional view of the case.
FIG. 20 is a block diagram showing an electrical configuration of the electromagnetic flowmeter.
FIG. 21 illustrates side views of outflow/inflow ports according to other embodiments.
FIG. 22 illustrates side cross-sectional views of resilient engaging pieces according to other embodiments.

### MODE FOR CARRYING OUT THE INVENTION

### (First embodiment)

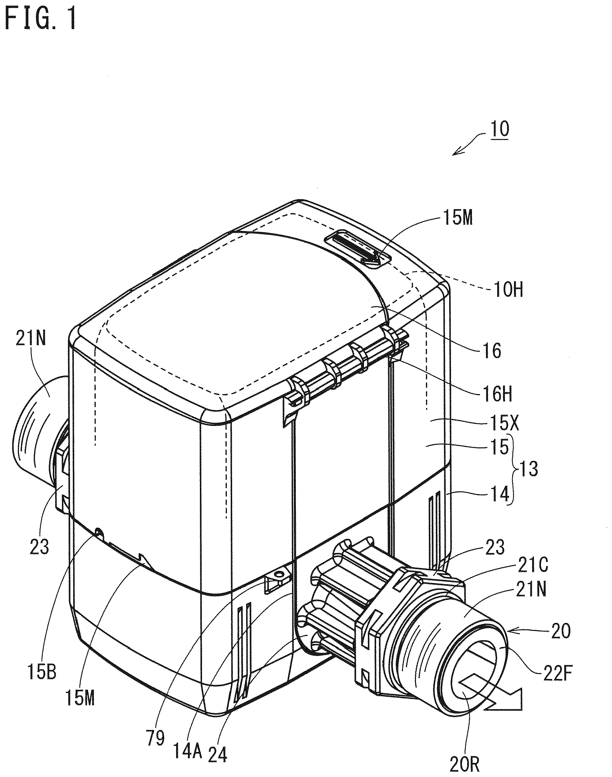

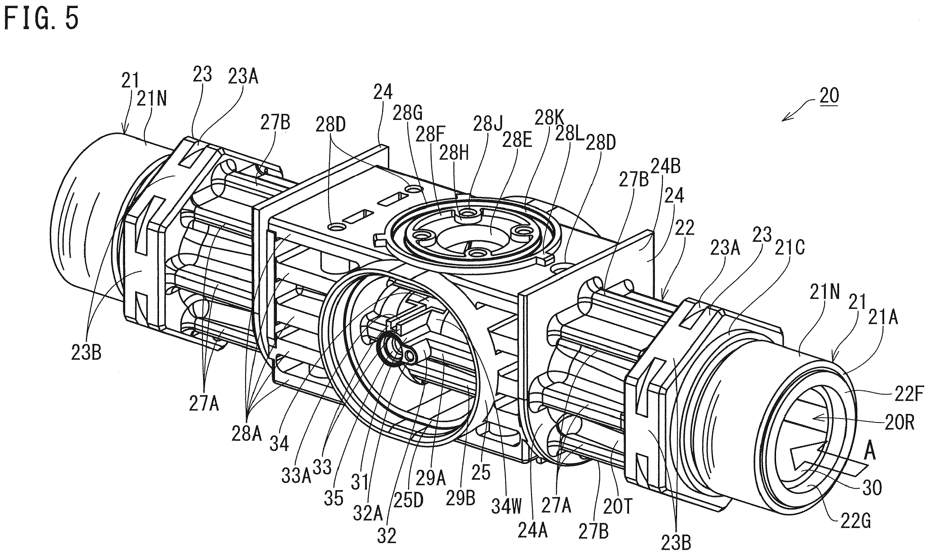

A first embodiment of the present invention will be hereinafter described with reference to FIG. 1 to FIG. 20. An electromagnetic flowmeter 10 of this embodiment shown in FIG. 1 is used as a water meter, for example. This electromagnetic flowmeter 10 is configured to have a meter body 10H made up of a plurality of components assembled to a middle part of a flow path housing 20 (see FIG. 5) connected to a midway point of a water pipe, this meter body 10H being housed inside a rectangular parallelepiped case 13.

While this electromagnetic flowmeter 10 can be used in any posture, for convenience of explanation, positional relationships of various parts are specified as shown in FIG. 1 where the flow path housing 20 extends horizontally, with a lid part 16 of the case 13 being arranged on the upper face, in describing various parts of the electromagnetic flowmeter 10 below.

First, the structure of the flow path housing 20 alone will be described. FIG. 5 shows the flow path housing 20 on its own. The flow path housing 20 extends horizontally, and tap water flows from one end to the other end of a measurement flow path 20R extending through the housing along a longitudinal direction thereof. The direction in which tap water flows is indicated with arrow A in FIG. 5 to FIG. 7. The case 13 has an engraved mark denoted at 15M (see FIG. 1) on an outer face for indicating the flow direction of the tap water.

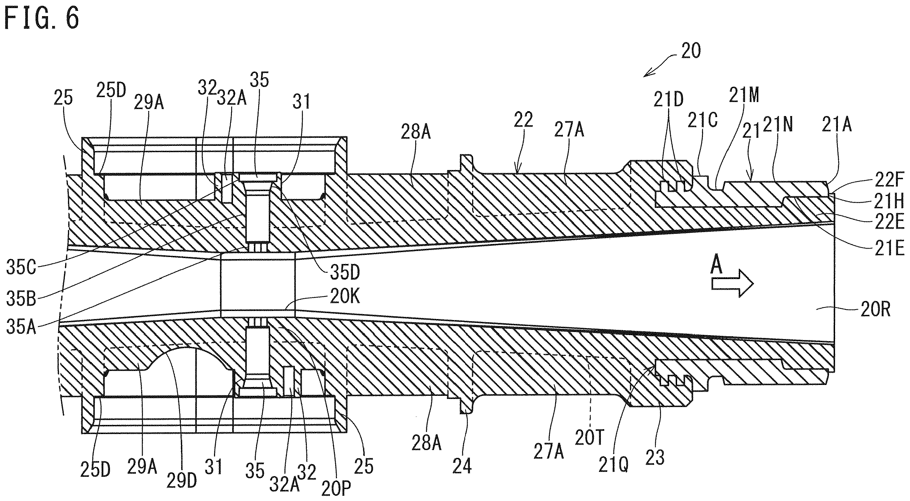

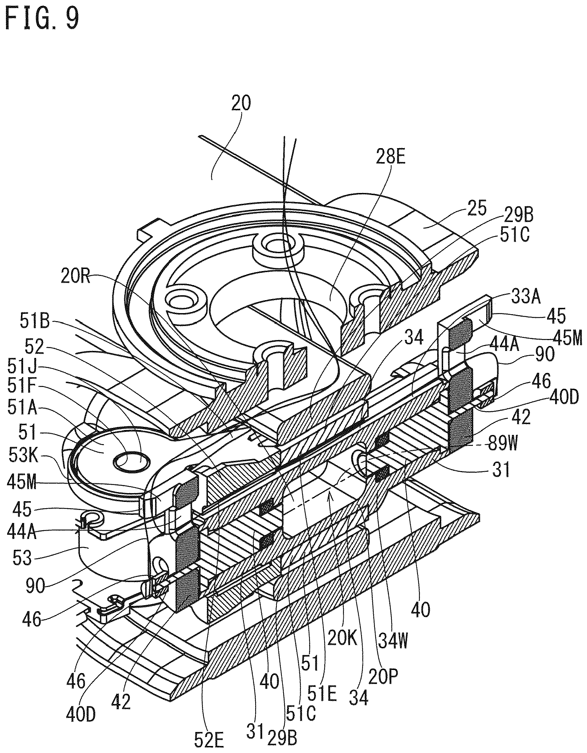

As shown in FIG. 6, the measurement flow path 20R is gradually reduced in diameter from both ends toward a central part, with a measurement part 20K being positioned slightly downstream relative to the center where the path is most constricted. The measurement part 20K has a horizontally long rectangular cross-sectional shape with rounded four corners as shown in FIG. 9, and extends over a predetermined length as shown in FIG. 6. The measurement flow path 20R has a circular cross section at both ends. The cross-sectional shape transforms gradually from circular at both ends to rectangular at the measurement part 20K.

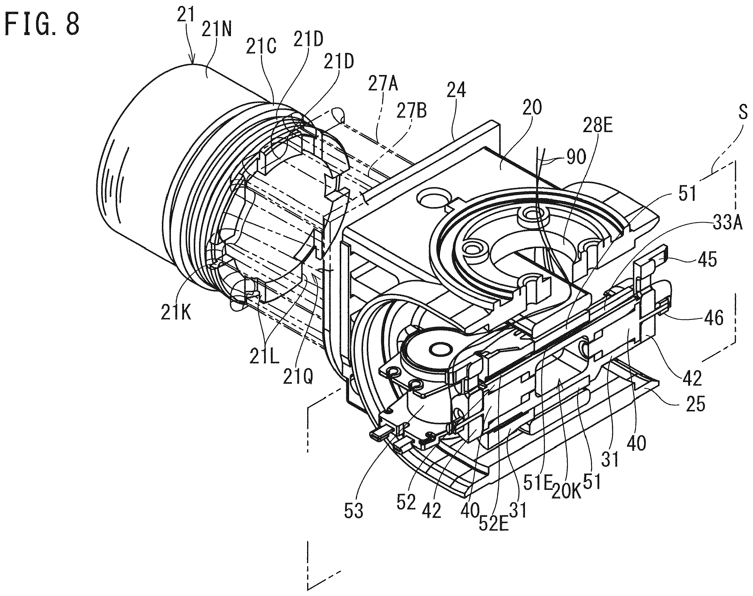

The flow path housing 20 is a resin insert mold having metal sleeves 21, 21 made of metal at both ends. FIG. 6 shows metal components of the metal sleeve 21 and other resin components 22 of the flow path housing 20 separately. FIG. 8 shows the entire metal sleeve 21 as seen through some of the resin components 22 of the flow path housing 20. These metal sleeves 21, 21 are exposed on outer faces of the flow path housing 20 at both ends, with male threads 21N being formed to the exposed parts for connection with water pipes.

More particularly, as shown in FIG. 8, the metal sleeve 21 is cylindrical as a whole, and provided with the male threads 21N on the outer circumferential surface thereof from the distal end of the metal sleeve 21 over to a position closer to the proximal end. As shown in FIG. 6, the metal sleeve 21 is configured such that it includes, on the proximal end side of the male threads 21N, a large-diameter flange 21C and a plurality of small-diameter flanges 21D spaced apart on a base part 21M having a smaller diameter than that of the male threads 21N. The large-diameter flange 21C has a disc-like shape with a larger outer diameter than that of the male threads 21N. The plurality of small-diameter flanges 21D are disposed on one side of the large-diameter flange 21C opposite from the male threads 21N and have a disc-like shape smaller than the large-diameter flange 21C.

As shown in FIG. 8, in proximal end portions of the metal sleeve 21 including one small-diameter flange 21D, there are formed a first square groove 21K radially transecting a central part of the metal sleeve 21, and a pair of second square grooves 21L, 21L intersecting the first square groove 21K at right angles. Thus, the proximal end face of the metal sleeve 21 has circumferentially alternating recesses and protrusions, forming a recess/protrusion engagement part 21Q.

As shown in FIG. 6, the inner face of the metal sleeve 21 is increased in diameter in a distal end portion to form an inner large-diameter part 21E. The distal end face of the metal sleeve 21 includes a distal end flat surface 21H orthogonal to the center axis of the metal sleeve 21 at the inner edge, and a distal end tapered surface 21A slightly inclined relative to the distal end flat surface 21H on the outer side of the inner edge.

The pair of metal sleeves 21, 21 are inserted into a pair of workpiece inserting holes provided in a metal mold for resin molding (not shown) for forming the flow path housing 20, and are set in a state where the large-diameter flanges 21C of the metal sleeves 21 fit on inner circumferential surfaces of the workpiece inserting holes and the distal end tapered surfaces 21A abut on end faces of the workpiece inserting holes. Resin is then injected into the metal mold, whereby the flow path housing 20 is formed. Thus, the metal sleeve 21 is exposed in an area from the distal end tapered surface 21A to the outer circumferential surface of the large-diameter flange 21C, while other parts are covered with resin that forms the flow path housing 20.

A distal end large-diameter part 22E of the resin component 22 of the flow path housing 20 is fitted with the inner large-diameter part 21E of the metal sleeve 21. The distal end large-diameter part 22E extends forward slightly more than the distal end face of the metal sleeve 21, with a cover flange 22F extending laterally from the protruded part covering the distal end flat surface 21H of the metal sleeve 21. The metal sleeve 21 on one side of the large-diameter flange 21C closer to the proximal end is covered by a tool engagement part 23 of the resin component 22 of the flow path housing 20.

As shown in FIG. 5, the tool engagement part 23 is positioned adjacent the large-diameter flange 21C and extends laterally more than the large-diameter flange 21C. The tool engagement part 23 is hexagonal for example when viewed in the axial direction of the flow path housing 20, and includes three parallel sets of (six in total) flat surfaces 23B on the outer circumference. One pair of these pairs of flat surfaces 23B lies parallel to the up and down direction. Angular parts between adjacent flat surfaces 23B, 23B are chamfered at a central position in a thickness direction of the tool engagement part 23 to form recessed grooves 23A to minimize warpage that can occur with shrinkage (so-called sink marks) during the resin molding process. The groove bottom surface of the recessed groove 23A is a circular arc surface concentric to the large-diameter flange 21C.

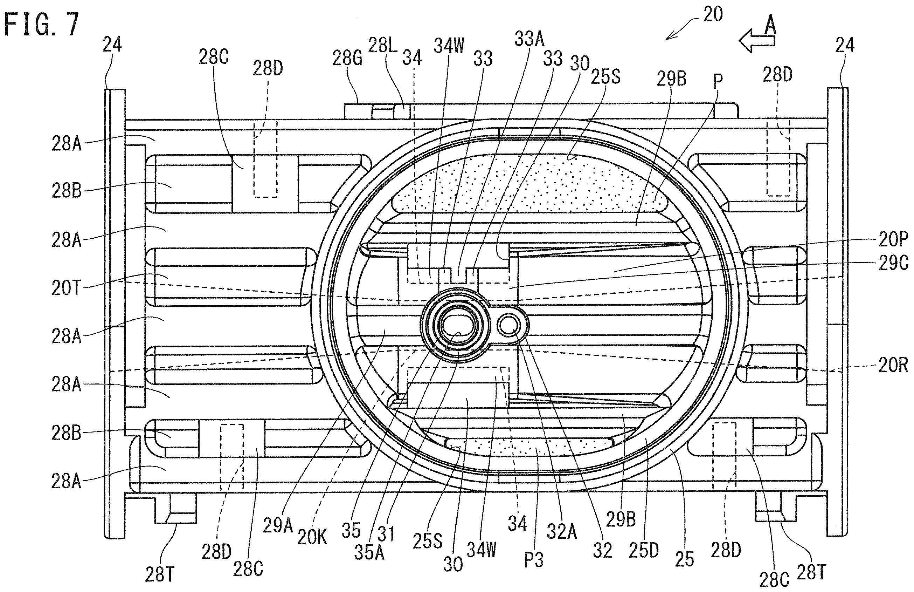

As shown in FIG. 6, between both tool engagement parts 23, 23 of the flow path housing 20 is provided a base sleeve 20T, which has an outer face that is gradually reduced in diameter toward a central part in the axial direction of the flow path housing 20 conforming to the shape of the measurement flow path 20R. As shown in FIG. 5, a horizontally extending cross sleeve 25 is provided orthogonally to the base sleeve 20T in a central part in the longitudinal direction of the flow path housing 20. The cross sleeve 25 has an oval cross-sectional shape with a major axis oriented along the axial direction of the flow path housing 20. A central part of the base sleeve 20T is arranged inside the cross sleeve 25 as shown in FIG. 7. The cross sleeve 25 has a dimension in the up and down direction roughly corresponding to the outer diameter of the male threads 21N. There are gaps 25S between the base sleeve 20T and inner upper and lower surfaces of the cross sleeve 25, these gaps 25S being filled with a potting material P to be described later. The upper gap 25S is larger in the up and down direction than the lower gap 25S.

As shown in FIG. 5, boundary flanges 24, 24 are provided between both tool engagement parts 23, 23 and the cross sleeve 25 of the flow path housing 20. The boundary flange 24 has a vertically long rectangular shape with the lower end being semicircular, and is made up of a circular arc part 24A positioned below the center of the flow path housing 20, and a quadrate part 24B that is square with a lateral width equal to the diameter of the circular arc part 24A and positioned above the center of the flow path housing 20. The tool engagement part 23 at one end of the flow path housing 20 is spaced from the boundary flange 24 at the same distance as that between the tool engagement part 23 at the other end of the flow path housing 20 and the boundary flange 24. The cross sleeve 25 is located closer to one end (more particularly, upstream side of the measurement flow path 20R) between the pair of boundary flanges 24, 24.

The flow path housing 20 is reinforced with a plurality of horizontal ribs 27A and vertical ribs 27B between the tool engagement part 23 and the boundary flange 24 at each end. The horizontal ribs 27A extend from upper, lower, and middle portions in the up and down direction of the base sleeve 20T horizontally to both sides, and connect the tool engagement part 23 and the boundary flange 24. The vertical ribs 27B extend from uppermost and lowermost portions of the base sleeve 20T upward and downward, and connect the tool engagement part 23 and the boundary flange 24. Tips of the horizontal ribs 27A and vertical ribs 27B, and joint corners between outer faces of the horizontal ribs 27A and vertical ribs 27B and the tool engagement parts 23, boundary flanges 24, and flow path housing 20 are chamfered with a radius that is large relative to the thickness of the horizontal ribs 27A and vertical ribs 27B.

The flow path housing 20 is reinforced with a plurality of (e.g., five) reinforcing plates 28A between the boundary flanges 24, 24. The plurality of reinforcing plates 28A have a horizontal plate-like shape and are spaced apart and arranged between a position near the upper end of the boundary flanges 24, 24 and a position near the lower end. The plurality of reinforcing plates 28A have the same lateral width. As shown in FIG. 7, a plurality of (e.g., three) reinforcing plates 28A except for the uppermost and lowermost reinforcing plates 28A are connected to the base sleeve 20T in widthwise central portions. Between the uppermost reinforcing plate 28A and the reinforcing plate 28A adjacent therebelow is provided a vertical rib 28B that connects widthwise central portions of these reinforcing plates. A similar vertical rib 28B is provided between the lowermost reinforcing plate 28A and the reinforcing plate 28A adjacent thereabove.

As shown in FIG. 5, side faces of the reinforcing plates 28A, 28A are flush with each other. The boundary flanges 24, except for their semicircular lower ends, extend from both side faces of the group of reinforcing plates 28A to both sides. Only the lowermost reinforcing plate 28A extends to both sides more than the boundary flanges 24.

As shown in FIG. 7, the upper face of the uppermost reinforcing plate 28A and the upper face of the cross sleeve 25 are flush with each other, and the lower face of the lowermost reinforcing plate 28A and the lower face of the cross sleeve 25 are flush with each other. Middle portions of all the reinforcing plates 28A are cut off inside the cross sleeve 25. Both axial ends of the cross sleeve 25 protrude sideways from both side faces of the group of reinforcing plates 28A.

As shown in FIG. 6, the cross sleeve 25 has stepped surfaces 25D, 25D inside, which are substantially flush with both side faces of the reinforcing plates 28A. The thickness of the cross sleeve is reduced from these stepped surfaces 25D to the distal ends.

As shown in FIG. 5, the uppermost reinforcing plate 28A is provided with mounting holes 28D in the widthwise center on the upstream side of the cross sleeve 25 and near both widthwise ends on the downstream side. Although not shown, the lowermost reinforcing plate 28A is provided with mounting holes 28D on the upstream side and near both widthwise ends on the downstream side of the cross sleeve 25. As shown in FIG. 5 and FIG. 7, the mounting hole 28D in the center mentioned above has a larger diameter than that of the mounting holes 28D near both ends, and extends as far as to the vertical rib 28B. Posts 28C that connect reinforcing plates 28A, 28A are provided coaxially with the mounting holes 28D near both ends, and the mounting holes 28D extend into the posts 28C. The lowermost reinforcing plate 28A is provided with positioning protrusions 28T, each extending downward from between each of the mounting holes 28D and each of the boundary flanges 24 closer to the mounting holes 28D.

As shown in FIG. 5, a wire passage hole 28E communicating with the inside of the cross sleeve 25 is formed in the uppermost reinforcing plate 28A. The wire passage hole 28E is arranged at the top of the cross sleeve 25 and in the widthwise center of the reinforcing plate 28A. An inner circular rib 28F and an outer circular rib 28G having concentric circles with the wire passage hole 28E protrude from the upper face of the reinforcing plate 28A. A plurality of (e.g., four) protrusions 28H are integrally provided with the inner circular rib 28F around the wire passage hole 28E and protrude from the upper face of the reinforcing plate 28A between the inner circular rib 28F and the wire passage hole 28E. A mounting hole 28J is drilled through each protrusion 28H and the reinforcing plate 28A. The inner circular rib 28F and the outer circular rib 28G form a circular groove 28K therebetween. A plurality of reinforcing protrusions 28L project from the outer face of the outer circular rib 28G.

The flow path housing 20 is reinforced inside the cross sleeve 25 with horizontal ribs 29A, bridging walls 29B, and vertical ribs 29C. The overall outer cross-sectional shape of the base sleeve 20T inside the cross sleeve 25 is horizontally long oval. The horizontal ribs 29A are horizontal and in the form of a plate extending from a central part in the up and down direction of the base sleeve 20T to both sides and connecting opposite parts of the inner faces of the cross sleeve 25. The bridging walls 29B are horizontal and strip-like, and arranged parallel to the base sleeve 20T on the upper side and lower side of the base sleeve 20T such as to connect opposite parts of the inner faces of the cross sleeve 25. The upper and lower bridging walls 29B, 29B are connected to a laterally central part of the base sleeve 20T by the vertical ribs 29C. The distal ends of the horizontal ribs 29A are positioned inner than the stepped surfaces 25D of the cross sleeve 25. The bridging walls 29B have a lateral width smaller than the distance between the distal ends of both horizontal ribs 29A, 29A.

The vertical ribs 29C, 29C are cut off on the upper side and lower side of the measurement part 20K, and the base sleeve 20T has a smaller thickness here compared to other parts. As shown in FIG. 7, there are formed parts accommodating spaces 30, 30 between the base sleeve 20T and the bridging walls 29B, 29B. Part of the base sleeve 20T positioned between the bridging walls 29B, 29B (i.e., part including the measurement part 20K inside) serves as a measurement tube part 20P. Horizontal, flat yoke placement surfaces 34, 34 are formed at positions directly above and below the measurement tube part 20P. A pair of columnar electrode support protrusions 31, 31 protrude toward both sides of the measurement part 20K from the center in the axial direction of the flow path housing 20, which is also at the center in the up and down direction. An electrode accommodating hole 35 communicating with the measurement part 20K is formed in a central part of each electrode support protrusion 31.

As shown in FIG. 5, a fixing protrusion 32 projects laterally and adjacently from each electrode support protrusion 31. As shown in FIG. 6, the fixing protrusion 32 is arranged adjacent to and upstream relative to one electrode support protrusion 31, while it is arranged adjacent to and downstream relative to the other electrode support protrusion 31. The fixing protrusion 32 is integral with each of the electrode support protrusions 31. The distal end face of the fixing protrusion 32 is flush with the distal end face of the electrode support protrusion 31. A mounting hole 32A is formed in a central part of each fixing protrusion 32, which does not extend through to the measurement flow path 20R.

A circular arc recess 29D is formed by cutting off the horizontal rib 29A in a circular arc shape, the circular arc recess 29D being adjacent to and upstream relative to the electrode support protrusion 31 having the fixing protrusion 32 on the downstream side. As shown in FIG. 5, a pair of ribs 33, 33 parallel to the electrode support protrusion 31 protrude from an upper face of the electrode support protrusion 31 having the fixing protrusion 32 on the upstream side, these ribs forming a wire accommodating groove 33A therebetween. As shown in FIG. 5 and FIG. 9, positioning walls 34W, 34W protrude from edges of one of the yoke placement surfaces 34, 34 on the side facing the electrode support protrusion 31 having the fixing protrusion 32 on the upstream side. The pair of ribs 33, 33 are connected to the upper positioning wall 34W as shown in FIG. 5, with the wire accommodating groove 33A extending through the positioning wall 34W, such that the bottom surface of the wire accommodating groove 33A is flush with the upper yoke placement surface 34 as shown in FIG. 9.

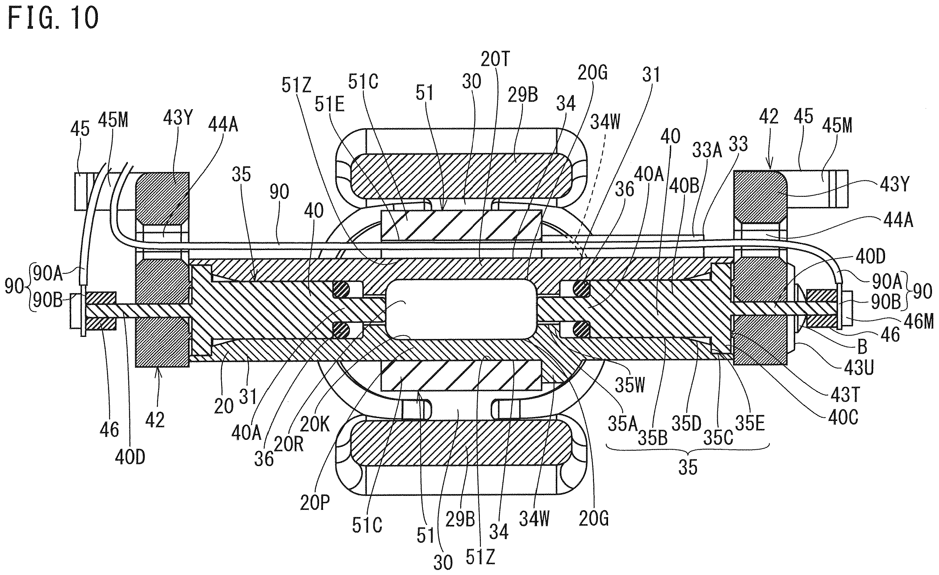

As shown in FIG. 10, the electrode accommodating hole 35 generally serves as a middle hole portion 35B with a circular cross section except for both ends. One end of the middle hole portion 35B farther from the measurement flow path 20R is a proximal end hole portion 35C having a circular cross section increased stepwise in diameter relative to the middle hole portion 35B. At the end of the middle hole portion 35B facing the proximal end hole portion 35C is formed a gently inclined tapered surface 35D. At the end of the electrode accommodating hole 35 closer to the measurement flow path 20R, a hole protrusion 35W extends inward, and the inside of this hole protrusion 35W serves as an outflow/inflow port 35A.

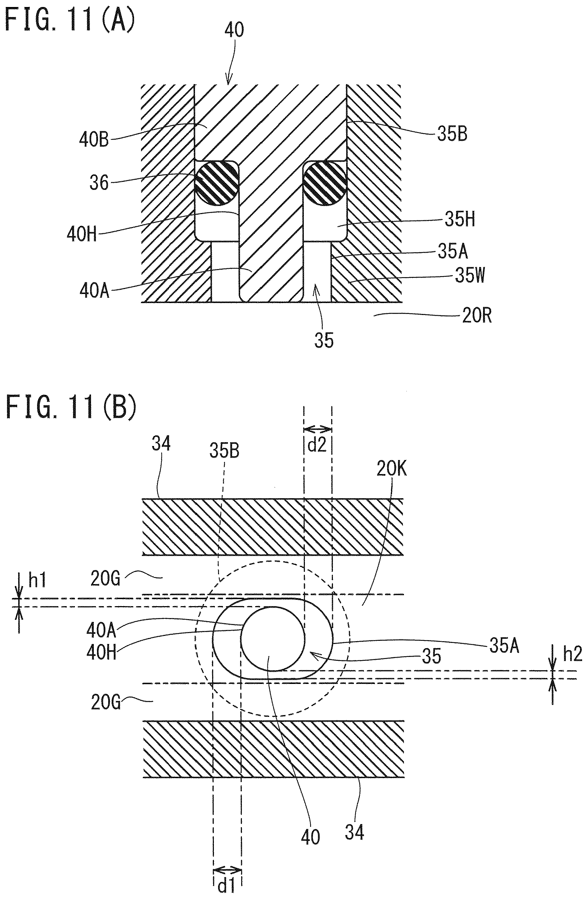

As shown in FIG. 11(A) and FIG. 11(B), the outflow/inflow port 35A is oval with its length along the axial direction of the measurement flow path 20R. The entire length along the major axis direction of the outflow/inflow port 35A is smaller than the inner diameter of the middle hole portion 35B. The entire length in the minor axis direction of the outflow/inflow port 35A is 0.7 to 1 times the distance between curved surfaces 20G, 20G that are rounded by chamfering (see FIG. 10) of the measurement part 20K (see FIG. 11(B)). In this embodiment, the major axis direction of the outflow/inflow port 35A is parallel to the axial direction of the measurement flow path 20R. The diameter of the middle hole portion 35B is substantially the same as the short side of the measurement part 20K.

The flow path housing 20 alone is configured as has been described above. Next, various components attached to this flow path housing 20 will be described.

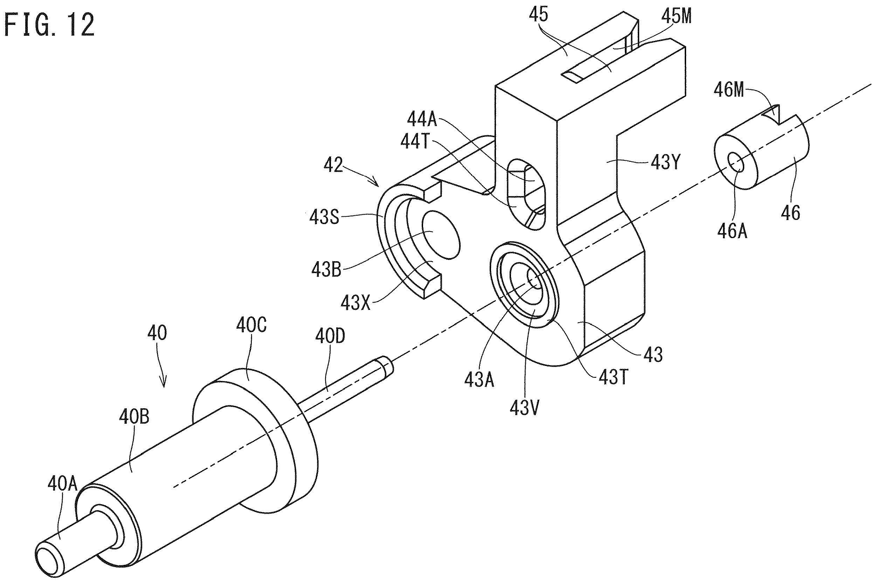

As shown in FIG. 10, a sensing electrode 40 is housed inside each electrode accommodating hole 35. The sensing electrodes 40 are made of a conductive metal having high corrosion resistance (e.g., stainless steel). The sensing electrode 40 has a circular cross section as a whole and includes a small-diameter distal end 40A, a medium-diameter body 40B, a large-diameter flange 40C, and a thin rod portion 40D, sequentially from one end, as shown in FIG. 12. As shown in FIG. 10, the sensing electrode 40 is inserted into the electrode accommodating hole 35, its small-diameter distal end 40A first, with an O-ring 36 being attached to the small-diameter distal end 40A. The large-diameter flange 40C abuts on a deep-end surface 35E of the proximal end hole portion 35C so that the sensing electrode 40 is positioned axially relative to the electrode accommodating hole 35. The distal end face of the medium-diameter body 40B is positioned closer to the distal end of the middle hole portion 35B. The distal end face of the small-diameter distal end 40A is positioned flush with the inner face of the measurement flow path 20R. As shown in FIG. 11(A) and FIG. 11(B), the small-diameter distal end 40A is positioned at the center of the outflow/inflow port 35A. As shown in FIG. 11(B), the diameter of the small-diameter distal end 40A is 0.6 to 0.9 times the entire length in the minor axis direction of the outflow/inflow port 35A so that there are gaps between the small-diameter distal end 40A and inner faces of the outflow/inflow port 35A.

As shown in FIG. 11(A), the O-ring 36 abuts on the distal end face of the medium-diameter body 40B and is spaced away from the hole protrusion 35W. Part of the electrode accommodating hole 35 on one side of the O-ring 36 facing the measurement flow path 20R serves as a submersion chamber 35H where water enters from the measurement flow path 20R, and one end of the sensing electrode 40 on one side of the O-ring 36 facing the measurement flow path 20R is a submersion distal-end part 40H that comes to contact with water inside the submersion chamber 35H. The widths h1 and h2 of the gaps between both ends in the minor axis direction of the outflow/inflow port 35A and the submersion distal-end part 40H (see FIG. 11(B)) are 0.2 mm each or more, for example. In this embodiment, the width h1 and the width h2 are 0.2 mm each. The widths d1 and d2 of the gaps between both ends in the major axis direction of the outflow/inflow port 35A and the submersion distal-end part 40H are 0.7 mm each or more, for example. In this embodiment, the width d1 and the width d2 are 0.7 mm each. In this embodiment, the smallest gap between the outflow/inflow port 35A and the submersion distal-end part 40H (i.e., the gaps between both ends in the minor axis direction of the outflow/inflow port 35A and the submersion distal-end part 40H in this embodiment) is 0.2 mm. In this embodiment, of the gaps between both ends in the major axis direction of the outflow/inflow port 35A and the submersion distal-end part 40H, the width of the gap on the upstream side is indicated as width d1, and the width of the gap on the downstream side is indicated as width d2.

As shown in FIG. 10, the pair of sensing electrodes 40, 40 are retained inside the electrode accommodating holes 35, 35 by a pair of resin electrode fixing members 42, 42. As shown in FIG. 12, the electrode fixing member 42 has a component base 43 that has an L shape when viewed in plan, with a thin rod passage hole 43A extending through the corner part of the L shape. A screw passage hole 43B extends through a distal portion of the short side 43X of the L shape, and a wire passage hole 44A extends through a middle part of the long side 43Y of the L shape.

An abutment rib 43T concentric with the thin rod passage hole 43A protrudes from a front face of the component base 43. A tapered surface 43V is formed at the distal end of the thin rod passage hole 43A. When the thin rod portion 40D of the sensing electrode 40 is inserted into the thin rod passage hole 43A, the abutment rib 43T abuts on the large-diameter flange 40C.

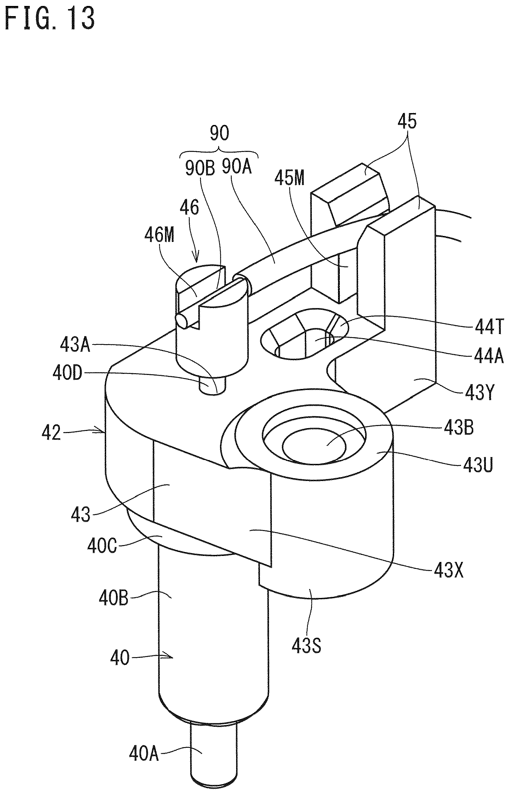

The distal end of the short side 43X of the L shape of the component base 43 has a circular arc shape concentric with the screw passage hole 43B, with a semicircular fitting rib 43S protruding forward from the distal edge thereof. As shown in FIG. 13, a circular rib 43U concentric with the screw passage hole 43B protrudes from a rear face of the component base 43. The fitting rib 43S is fitted with the outer side of the fixing protrusion 32 mentioned above (see FIG. 7) so that the mounting hole 32A faces the screw passage hole 43B. With a screw B having passed through the screw passage hole 43B being threaded into the mounting hole 32A, the electrode fixing member 42 is secured to the flow path housing 20. This also causes the electrode fixing member 42 to push the sensing electrode 40 deeper into the electrode accommodating hole 35 to be set in position as mentioned above. The head of the screw B fits inside the circular rib 43U (see FIG. 13).

As shown in FIG. 12, the wire passage hole 44A has an oval shape extending along the longitudinal direction of the long side 43Y of the L shape, and the wire passage hole 44A is provided with tapered surfaces 44T at both open edges. As shown in FIG. 10, when the pair of electrode fixing members 42, 42 are secured to the flow path housing 20, the long sides 43Y, 43Y of these electrode fixing members 42, 42 stand upright from distal ends of the respective electrode support protrusions 31, 31, so that the wire passage holes 44A, 44A of the electrode fixing members 42, 42 face each other on both sides of the parts accommodating spaces 30. The inner face at the lower end of the wire passage hole 44A is arranged flush with the upper yoke placement surface 34 and the bottom surface of the wire accommodating groove 33A.

As shown in FIG. 13, a pair of opposing protruded walls 45, 45 protrude from a rear face at the distal end of the long side 43Y and face each other in the width direction of the long side 43Y, these forming a wire receiving groove 45M therebetween. The opposing distal end corners of the pair of opposing protruded walls 45, 45 are chamfered. As shown in FIG. 10, the joint corner between a bottom surface of the wire receiving groove 45M and the distal end face of the long side 43Y is rounded by chamfering.

As shown in FIG. 13, a wire connecting member 46 is secured to the distal end of the thin rod portion 40D of the sensing electrode 40 extending through the electrode fixing member 42 for connecting a wire 90. The wire connecting member 46 extending in a radial direction is columnar as a whole, and provided with a wire receiving groove 46M in one end face, and a through hole 46A (see FIG. 12) is formed in a central part. The thin rod portion 40D is press-fitted to the through hole 46A from the side opposite from the wire receiving groove 46M such that the bottom surface of the wire receiving groove 46M is flush with the distal end face of the thin rod portion 40D.

The wire 90 is formed, for example, from a copper wire core 90B covered with an insulating coating 90A. The wire is soldered or brazed such that a tip portion of the wire core 90B exposed from the insulating coating 90A is arranged inside the wire receiving groove 46M. While the sensing electrode 40 is made of stainless steel having high corrosion resistance for example as noted above, the wire connecting member 46 is made of a conductive material (e.g., copper) having high wettability to solder or brazing metal. Thus, connection between the sensing electrode 40 and the wire 90 is established reliably while corrosion resistance of the sensing electrode 40 is ensured. Also, deformation of the electrode fixing member 42 which may be caused by the heat during soldering or the like is prevented because the wire connecting member 46 is secured to the distal end of the thin rod portion 40D and separated from the resin electrode fixing member 42.

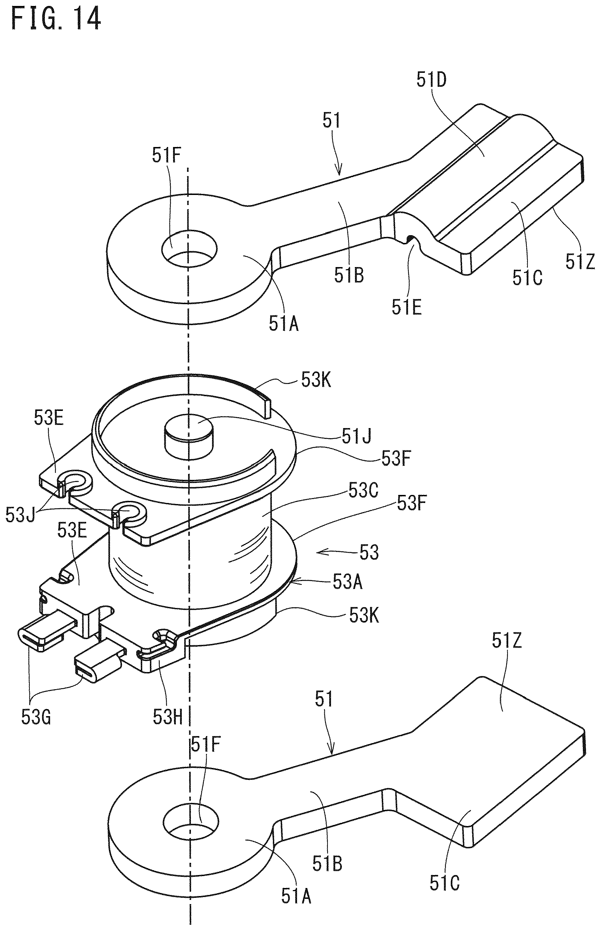

As shown in FIG. 9, a coil unit 53 is disposed adjacent one electrode support protrusion 31. The coil unit 53 is configured as shown in FIG. 14, wherein coils 53C are wound around a resin bobbin 53A, with a core shaft 51J extending through the center of the bobbin 53A. The center axis of the bobbin 53A is oriented along the up and down direction. Tabs 53E, 53E extend horizontally from flanges 53F, 53F at both upper and lower ends of the bobbin 53A. One side of the coils 53C opposite from the side where the tabs 53E, 53E protrude is received in the circular arc recess 29D shown in FIG. 6 and mentioned in the foregoing.

As shown in FIG. 14, a terminal support wall 53H protrudes downward from the distal end of the lower tab 53E, and a pair of terminals 53G, 53G extend through this terminal support wall 53H. Both terminals of the coils 53C are connected to the proximal ends (not shown) of the pair of terminals 53G, 53G. The distal ends of the pair of terminals 53G, 53G protrude forward from the distal end face of the tab 53E and are folded in half and crimped, with cores of the wires (not shown) sandwiched therein and soldered or brazed.

Wire passage holes 53J, 53J extend through up and down at the distal end of the upper tab 53E. These wire passage holes 53J, 53J partly open to the distal end face of the tab 53E. The terminals 53G, 53G are bent upward at right angles from the state shown in FIG. 14 so that the pair of wires connected to these terminals 53G, 53G are passed through the wire passage holes 53J, 53J and extended upward.

Both ends of the core shaft 51J protrude from outer faces of the flanges 53F, 53F, and encircling walls 53K, 53K protrude from the flanges 53F, 53F such as to surround both ends of the core shaft 51J. The encircling walls 53K form a circle around the core shaft 51J at the center, and are partly cut off at portions facing the yoke placement surfaces 34, 34 of the flow path housing 20. Proximal end plates 51A, 51A of a pair of yokes 51, 51 to be described later are accommodated inside the encircling walls 53K, 53K.

The yokes 51 are punched out from a ferrite metal sheet, for example, and made of a disc-like proximal end plate 51A, a rectangular distal end plate 51C, and a strip-like middle plate 51B connecting these. A through hole 51F is formed at the center of the proximal end plate 51A. The middle plate 51B extends from one corner of the distal end plate 51C diagonally. The proximal end plates 51A, 51A of the pair of yokes 51, 51 are accommodated inside the upper and lower encircling walls 53K, 53K of the coil unit 53, with both ends of the core shaft 51J fitting into the through holes 51F of the respective proximal end plates 51A, as shown in FIG. 9. The middle plates 51B, 51B of the pair of yokes 51, 51 extend out from the cut-off portions of the encircling walls 53K, 53K, and magnetic flux passing surfaces 51Z, 51Z (see FIG. 14), which are one of the front and back surfaces of the distal end plates 51C, 51C, are overlapped on the yoke placement surfaces 34, 34.

The distal end plate 51C is fixed in position from three sides by the positioning wall 34W and wall portions on both sides of the positioning wall 34W (see FIG. 7) of the flow path housing 20 described above. The long side of the distal end plate 51C is oriented along a direction in which the pair of sensing electrodes 40, 40 face each other. The center of the short side of the distal end plate 51C is positioned directly above the center line of the coaxial pair of sensing electrodes 40, 40. A yoke holder 52 is fitted to the electrode support protrusion 31 adjacent the coil unit 53, and each distal end plate 51C is sandwiched between this yoke holder 52 and the positioning wall 34W. A wedge piece (not shown) protruding from the yoke holder 52 is thrust between each distal end plate 51C and the bridging wall 29B so that each distal end plate 51C is pressed against the yoke placement surface 34.

As shown in FIG. 14, a central part in the short side direction of the distal end plate 51C of the yoke 51 disposed on the upper side is protruded in a semicircular shape to the opposite side from the magnetic flux passing surface 51Z so as to form a groove-like ridge 51D. A wire receiving groove 51E inside the groove-like ridge 51D is positioned on an extension line of the wire accommodating groove 33A mentioned before. As shown in FIG. 9, a wire receiving groove 52E is also formed in the yoke holder 52 on an extension line of the wire receiving groove 51E.

As shown in FIG. 9, the wire 90 from one of the sensing electrodes 40 farther from the coil unit 53 is bent above the sensing electrode 40, and passed through the wire passage hole 44A of one of the electrode fixing members 42, wire accommodating groove 33A, wire receiving grooves 51E and 52E, and wire passage hole 44A of the other electrode fixing member 42 (i.e., the one closer to the coil unit 53). The wire 90 from one of the sensing electrodes 40 farther from the coil unit 53 is bent upward after it is passed through the wire passage hole 44A of the other electrode fixing member 42. The wire 90 from the sensing electrode 40 closer to the coil unit 53 extends upward from the sensing electrode 40. Middle portions of the wires 90, 90 from both sensing electrodes 40, 40 are received in the wire receiving groove 45M of the electrode fixing member 42 side by side, one on the deeper side, bent thereabove to extend laterally toward the center of the flow path housing 20, and drawn out through the wire passage hole 28E above the flow path housing 20 to be connected to a control substrate 73 to be described later. A pair of wires (not shown) extending from the coil unit 53 are also drawn out upward through the wire passage hole 28E and connected to the control substrate 73.

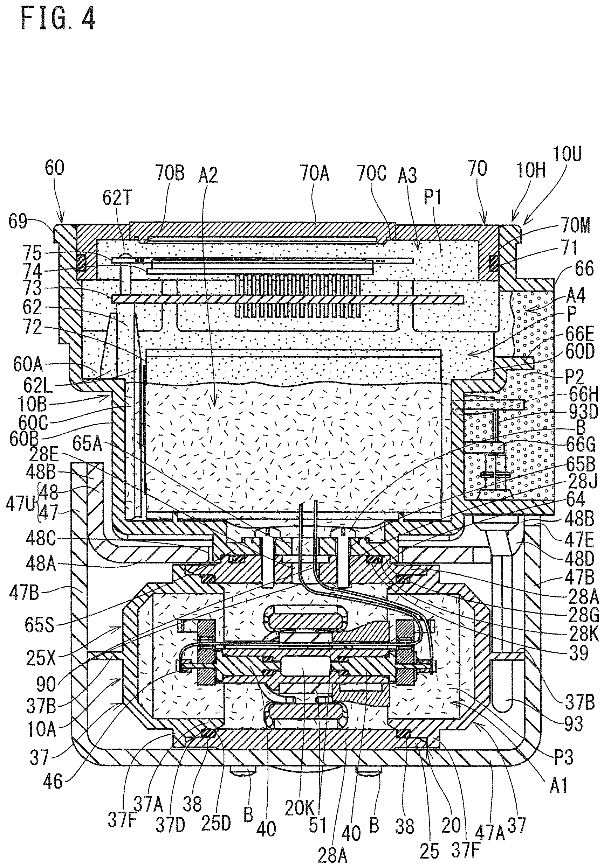

As shown in FIG. 4, both ends of the cross sleeve 25 of the flow path housing 20 are closed by a pair of side caps 37, 37. The side cap 37 has an oval cap shape, with its open end being fitted with the inside of the cross sleeve 25, and a flange 37F extending sideways from a circumferential surface of the cross sleeve 25 being in contact with the distal end face of the cross sleeve 25. The outer face of the side cap 37 is narrowed stepwise at the distal end to form a sealing fit part 37A. An O-ring 38 is fitted on the outer side of the sealing fit part 37A, interposed between a stepped surface 37D at the proximal end of the sealing fit part 37A and a stepped surface 25D of the cross sleeve 25. A tab 37B extends out from the outer face of each side cap 37 in the axial direction of the cross sleeve 25 and abutted to an inner face of a main shield member 47 to be described later, whereby each side cap 37 is retained to the cross sleeve 25.

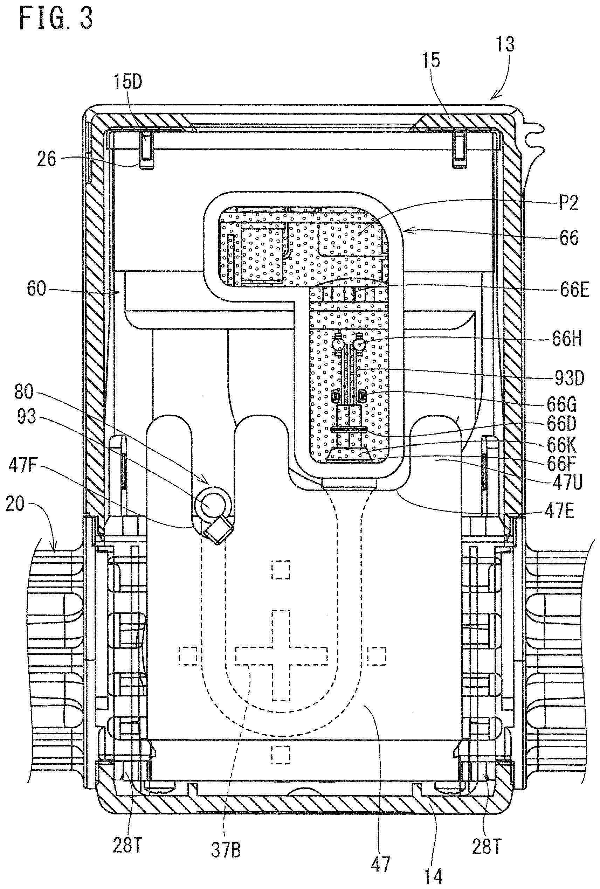

As shown in FIG. 4, a central part of the flow path housing 20 is enclosed by a magnetic shield 47U from both sides. The magnetic shield 47U is made up of a main shield member 47 and a sub shield member 48. These main shield member 47 and sub shield member 48 are magnetic metal plates bent in a square U shape. A bottom side part 47A of the main shield member 47 lies beneath the lower face of the flow path housing 20, snugly fit between the positioning protrusions 28T, 28T of the flow path housing 20 as shown in FIG. 3. A plurality of screw passage holes (not shown) corresponding to the mounting holes 28D of the flow path housing 20 (see FIG. 7) are formed in the bottom side part 47A of the main shield member 47. Screws B having passed through the screw passage holes are tightened into the mounting holes 28D to secure the main shield member 47 to the flow path housing 20. A pair of vertical side parts 47B, 47B of the main shield member 47 extend upward to a position higher than the upper face of the flow path housing 20.

A bottom side part 48A of the sub shield member 48 is placed over the upper face of the flow path housing 20. The bottom side part 48A is provided with a through hole 48C that receives the outer circular rib 28G on the upper face of the flow path housing 20, and a plurality of screw passage holes (not shown) corresponding to the upper mounting holes 28D of the flow path housing 20 (see FIG. 7). Screws B having passed through the screw passage holes are tightened into the mounting holes 28D to secure the sub shield member 48 to the flow path housing 20. A pair of vertical side parts 48B, 48B of the sub shield member 48 are overlapped on the inner faces of the vertical side parts 47B, 47B of the main shield member 47, such that the upper faces of these vertical side parts 47B and 48B are flush with each other.

The vertical side parts 47B and 48B on the right side in FIG. 4 are provided with a first cut-out portion 47E for avoiding interference with a hood part 66 extending from a substrate case 60 to be described later, and a second cut-out portion 47F for allowing external connection cables 93, which are drawn out from the hood part 66 downward and bent upward, to pass through, as shown in FIG. 3.

A control unit 10U is assembled to the central part of the flow path housing 20 over the sub shield member 48. The control unit 10U is made up of a battery 72, a control substrate 73, a monitor 74, an antenna substrate 75 and the like, these being encased in a rectangular parallelepiped resin substrate case 60.

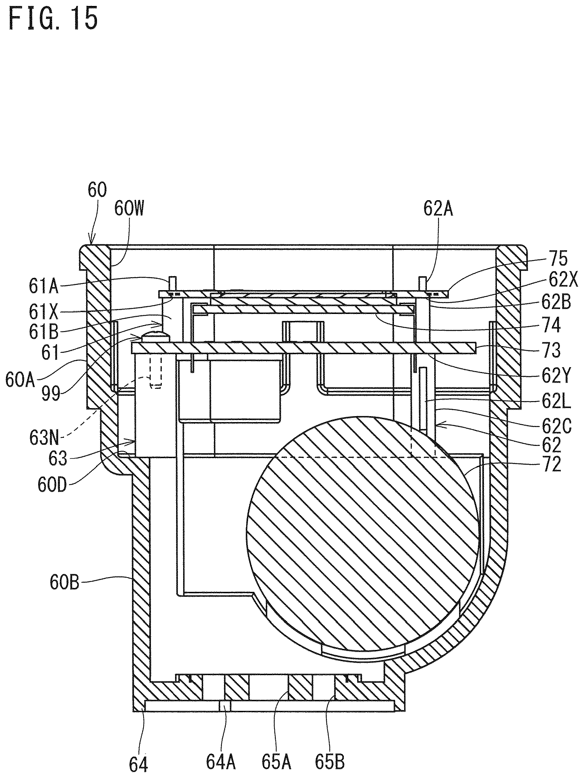

As shown in FIG. 15, the substrate case 60 includes an upper accommodating part 60A and a lower accommodating part 60B. The upper accommodating part 60A has a rectangular parallelepiped structure having a rectangular shape when viewed in plan, and an upper face opening 60W that is closed by a lid member 70. The lower accommodating part 60B is rectangular parallelepiped as a whole, with a pair of short side parts and one long side part reduced in size stepwise from the upper accommodating part 60A. Therefore, a stepped surface 60D extending horizontally along three sides of the rectangle that is the planar shape of the upper accommodating part 60A is formed between the upper accommodating part 60A and the lower accommodating part 60B (see FIG. 4 and FIG. 15). A columnar battery 72 is housed in the lower accommodating part 60B, with its axial direction coinciding with the long side direction of the upper accommodating part 60A. A lower end part of one side wall of the lower accommodating part 60B is curved in a circular arc conforming to the shape of the battery 72. The upper part of the battery 72 is positioned inside the upper accommodating part 60A.

As shown in FIG. 4, a hood part 66 protrudes from one outer surface of the substrate case 60 corresponding to one short side of the planar shape of the upper accommodating part 60A. As shown in FIG. 3, the hood part 66 has an L shape, extending sideways from a lateral point of the upper accommodating part 60A, and then downward from the end thereof as far as to the lower end position of the lower accommodating part 60B. The distal end face of the hood part 66 is entirely parallel to the vertical direction. The hood part 66 is divided by a laterally extending partition wall 66E between the lateral side portion and the vertical side portion of the L shape. The distal end face of this partition wall 66E is positioned deeper into the hood part 66 than the distal end face of the entire hood part 66. A circular through hole 66F is formed in a lower end portion of the hood part 66 to extend through up and down. Inside the vertical side portion of the L shape of the hood part 66 are formed a pair of guide protrusions 66G projected from an outer surface of the substrate case 60, and a pair of cable passage holes 66H extending through the side wall of the substrate case 60. The pair of guide protrusions 66G are positioned above the through hole 66F, and the pair of cable passage holes 66H are positioned further above.

As shown in FIG. 4, a cylindrical wall 64 protrudes from a lower face of the substrate case 60. A circular bottom wall 65S is provided inside the cylindrical wall 64 closer to the lower end. A wire passage hole 65A is formed in a central part of the circular bottom wall 65S. A plurality of screw passage holes 65B are formed around this wire passage hole 65A. The cylindrical wall 64 is further provided with a plurality of notches 64A (see FIG. 15) corresponding to the reinforcing protrusions 28L (see FIG. 5) on the upper face of the flow path housing 20 in a plurality of points. The cylindrical wall 64 is fitted to the outer side of the outer circular rib 28G on the upper face of the flow path housing 20. The substrate case 60 is secured to the flow path housing 20 with screws B having passed through the screw passage holes 65B and then being fastened into the mounting holes 28J of the flow path housing 20. An O-ring 39 is accommodated between the inner circular rib 28F and the outer circular rib 28G of the flow path housing 20 and compressed between the flow path housing 20 and the substrate case 60.

The lid member 70 has a rectangular cap shape, with its open end being fitted with the inside of the substrate case 60. The upper faces of these lid member 70 and substrate case 60 are flush with each other. A ring groove 70M is formed in an outer circumferential surface of the lid member 70 close to the lower end. An O-ring 71 is accommodated in this ring groove 70M and compressed between the lid member 70 and the substrate case 60. The lid member 70 is made entirely of a transparent material (e.g., resin, glass and the like), and provided with a rectangular light transmitting part 70A corresponding to a window part 75M of the antenna substrate 75 to be described later. The light transmitting part 70A is slightly protruded from the upper face of the lid member 70 stepwise. On the underside, outer edges of the light transmitting part 70A of the lid member 70 are surrounded by a frame rib 70B as shown in FIG. 4. The lower face of the lid member 70 is slightly dented on the outer side of the frame rib 70B to form a frame groove 70C. The lower face of the lid member 70 is painted black for example or in other colors on the outer side of the frame rib 70B, so that the interior of the substrate case 60 is visible only through the light transmitting part 70A.

As shown in FIG. 15, a first pole 63, second poles 62, and a third pole 61 stand upright from the stepped surface 60D of the substrate case 60. The first pole 63 is positioned at the center of the stepped surface 60D along one long side of the upper accommodating part 60A slightly closer to one short side, and has a columnar shape with a circular cross section. A substrate fixing hole 63N is bored in a central part of the first pole 63 from the upper face to a midway position in the up and down direction.

The second poles 62 are positioned at one end of the stepped surface 60D along one short side of the upper accommodating part 60A on the side farther from the first pole 63, and at one end along the other short side of the substrate case 60 on the side closer to the first pole 63. The second pole 62 includes, sequentially from the upper side, a small-diameter part 62A, a small radially-enlarged part 62B, and a large radially-enlarged part 62C, i.e., its outer diameter increases downward stepwise. A stepped surface 62Y between the small radially-enlarged part 62B and the large radially-enlarged part 62C of both second poles 62, 62 is flush with the upper end face of the first pole 63. The outer diameter of the large radially-enlarged part 62C is larger than that of the third pole 61.

The third pole 61 is positioned at one end of the stepped surface 60D along one short side of the upper accommodating part 60A on the side closer to the first pole 63. The third pole 61 has a stepped surface 61X near the upper end, and this stepped surface 61X is flush with the stepped surface 62X of the second pole 62. A small-diameter part 61A at the upper end of the third pole 61 and the small-diameter part 62A at the upper end of the second pole 62 have the same outer diameter. A large-diameter part 61B below the small-diameter part 61A of the third pole 61 is thinner than the large radially-enlarged part 62C of the second pole 62 and thicker than the small radially-enlarged part 62B. The second and third poles 61 and 62 are partly positioned on the stepped surface 60D, the rest being positioned on a rib 60C (see FIG. 4) extended from an inner surface of the lower accommodating part 60B. The lower ends of the second and third poles 61 and 62 are reinforced by reinforcing ribs 61L and 62L.

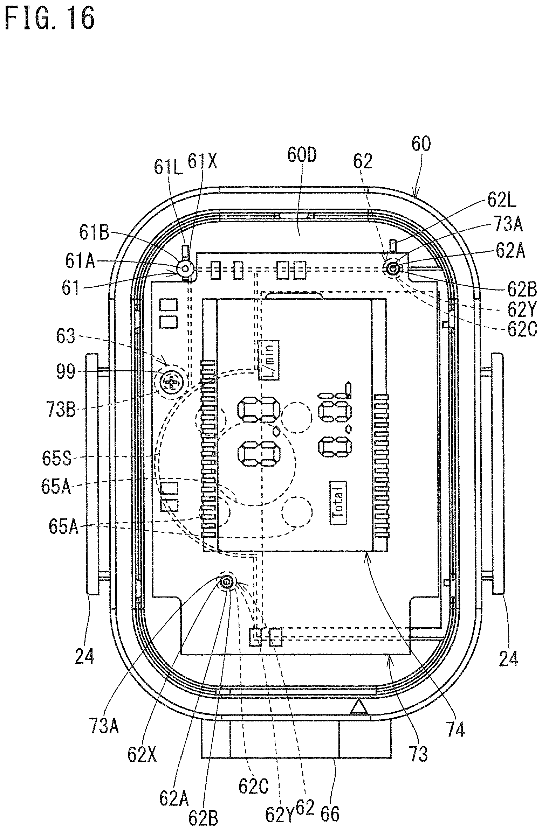

FIG. 16 shows a planar shape of the control substrate 73. As shown in this drawing, the control substrate 73 is rectangular and of a size that just fits in the upper accommodating part 60A, with four corners of the rectangle cut off in a square shape. The control substrate 73 is disposed parallel to the upper face of the substrate case 60. The control substrate 73 has a pair of through holes 73A, 73A that extend through to the lower ends of the small radially-enlarged parts 62B, 62B of the pair of second poles 62, 62 described above, and the stepped surfaces 62Y, 62Y of the pair of second poles 62, 62 are in contact with the open edges of these pair of through holes 73A, 73A. The control substrate 73 is also provided with a through hole 73B corresponding to the substrate fixing hole 63N of the first pole 63. A substrate fixing screw 99 having passed through this through hole 73B is threaded into the substrate fixing hole 63N. Thus, the control substrate 73 is positioned substantially at a central position in the up and down direction of the upper accommodating part 60A and secured to the substrate case 60. The third pole 61 passes through the cut-out portion in one corner of the control substrate 73 and extends upward beyond the control substrate 73.

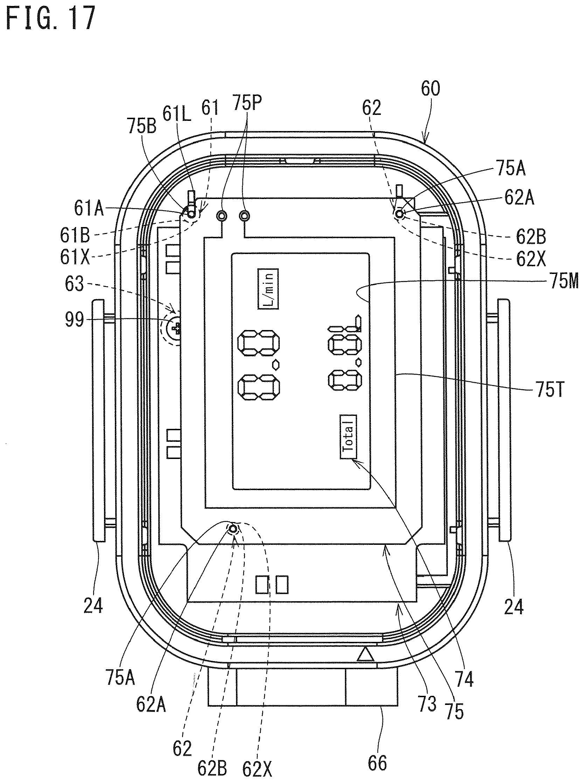

FIG. 17 shows a planar shape of the antenna substrate 75. As shown in the drawing, the antenna substrate 75 has a hollow rectangular structure (i.e., frame structure), with a rectangular window part 75M inside. A loop antenna 75T is printed on the antenna substrate 75 such as to encircle the window part 75M. A pair of pin holes 75P, 75P are provided, to which both ends of the loop antenna 75T are connected. The antenna substrate 75 is further provided with a pair of through holes 75A, 75A for the small-diameter parts 62A, 62A of the pair of second poles 62, 62 described above to pass through, and a through groove 75B for the small-diameter part 61A of the third pole 61 to pass through. The stepped surface 62X of the second pole 62 and the stepped surface 61X of the third pole 61 are in contact with open edges of these through holes 75A and through groove 75B. Portions of the small-diameter part 61A and small-diameter part 62A protruding above the antenna substrate 75 are thermally riveted and thus head parts 62T shown in FIG. 4 are formed. Thus, the antenna substrate 75 is positioned substantially at an upper end in the up and down direction of the upper accommodating part 60A and secured to the substrate case 60.

A pair of pins (not shown) having passed through the pin holes 75P, 75P pass through pin holes (not shown) of the control substrate 73, and both ends of the pins are soldered to the pin holes. Thus, the control substrate 73 and the antenna substrate 75 are electrically connected to each other.

A monitor 74 is mounted to the control substrate 73 where it is covered by the antenna substrate 75. The monitor 74 has a pin grid array structure, for example, wherein a plurality of pins extend downward from outer edges. Lower ends of these pins are soldered to the control substrate 73 so that the monitor is suspended above the control substrate 73. The entire upper face of the monitor 74 except for a pair of opposite outer edges is a liquid crystal screen, where an integrated flow rate and a flow rate per unit time are displayed. As shown in FIG. 17, the entire monitor 74 except for the pair of outer edges mentioned above are visible through the window part 75M of the antenna substrate 75.

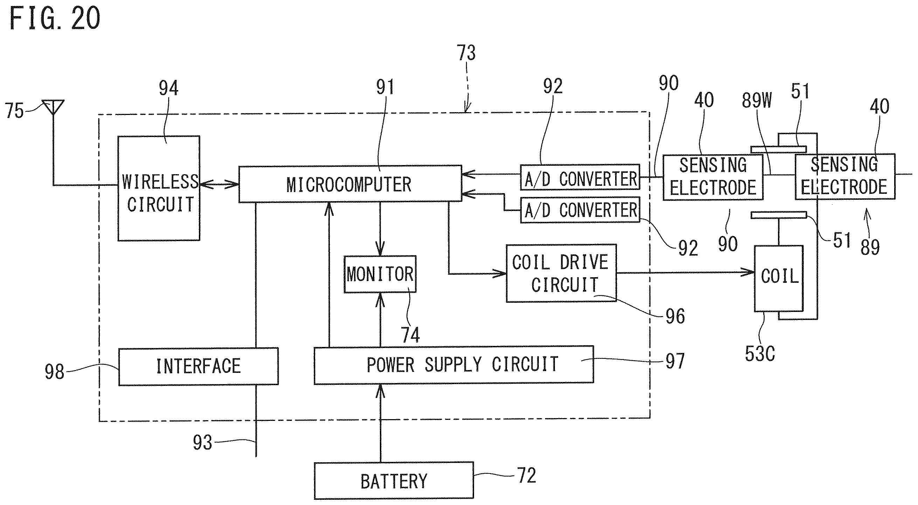

As shown in FIG. 20, the control substrate 73 carries thereon, in addition to the monitor 74, a microcomputer 91, a wireless circuit 94, an A/D converter 92, a coil drive circuit 96, and a power supply circuit 97. The microcomputer 91 controls magnetization of the coils 53C via the coil drive circuit 96, and calculates a flow rate from detection results of the sensing electrodes 40 taken via the A/D converter 92. The obtained flow rate is transmitted wirelessly by means of the wireless circuit 94 and antenna 75 by near field wireless communication.

External connection cables 93 are connected to the microcomputer 91 via an interface 98. The external connection cables 93 are paired and drawn into a tubular elastomer bushing 66K (see FIG. 3) attached to the through hole 66F of the hood part 66. The external connection cables 93 are sandwiched between a pair of guide protrusions 66G, 66G inside the hood part 66, bent above the sandwiched section, and drawn from inside of the hood part 66 into the substrate case 60 through cable passage holes 66H. A metal cord clip 66D is secured to the external connection cables 93 between the through hole 66F and the guide protrusions 66G. A seeping water shielding portion 93D, where the insulating coating is peeled, is provided to the external connection cables 93 between the guide protrusions 66G and the cable passage holes 66H.

As shown in FIG. 3, sections of the external connection cables 93 extending downward from the hood part 66 are housed inside the magnetic shield 47U through a cable passage hole 48D provided in the magnetic shield 47U, bent back up, drawn out through another cable passage hole 48D, and bent outward to pass through the second cut-out portion 47F. A binding band 80 is wound around the external connection cables 93 near the second cut-out portion 47F to retain the cables at the edge of the second cut-out portion 47F.

The cross sleeve 25, which is closed by the pair of side caps 37, 37 mentioned above, serves as an electrode case 25X for accommodating the sensing electrodes 40 and others, in comparison to the substrate case 60. The electrode case 25X and substrate case 60 communicate with each other and constitute one electric component case 69. The interior of the entire electric component case 69 can be divided into several areas for each group of contents as follows: The interior of the electrode case 25X is a lower area A1 accommodating the coils 53C and the pair of sensing electrodes 40, 40; the entire lower accommodating part 60B of the substrate case 60 and a lower part of the upper accommodating part 60A are a middle area A2 accommodating the battery 72, and the entire upper part thereabove is an upper area A3 accommodating the control substrate 73 and the monitor 74. The entire electric component case 69 is filled with a plurality of types of potting materials separately in consideration of the characteristics and the like of the contents. A hood interior area A4 of the hood part 66 is also filled with a potting material separately in order to shut the inside of the electric component case 69 out from the outside.

More specifically, in this embodiment, the potting material P filling the interior of the electric component case 69 is made of three types of (first to third) potting materials P1 to P3.

The upper area A3 and an upper part of the middle area A2 (i.e., inside of the upper accommodating part 60A) are filled with the first potting material P1. The first potting material P1 is made of a silicone resin. Since the first potting material P1 is transparent, the monitor 74 is visible through the lid member 70 and the first potting material P1. The first potting material P1 covers the upper side of the battery 72.

The hood interior area A4 is filled with the second potting material P2, which is made of an epoxy resin. The second potting material P2 is in tight contact with the seeping water shielding portion 93D of the external connection cables 93, so as to stably fix the external connection cables 93. The second potting material P2 is also in tight contact with the cord clip 66D secured to the external connection cables 93, which also helps secure the external connection cables 93 stably.

The lower area A1 and a lower part of the middle area A2 (i.e., inside the electrode case 25X and the lower accommodating part 60B) are filled with the third potting material P3. The third potting material P3 and the first potting material P1 adjoin each other up and down. The third potting material P3 covers a lower part of the battery 72. In this embodiment, the third potting material P3 is made of a different type of epoxy resin from that of the second potting material P2.

In the electromagnetic flowmeter 10 of this embodiment, the entire interior of the electric component case 69 and the hood interior area A4 are filled with the first to third potting materials P1 to P3, so that the electric components (substrates such as the control substrate 73, monitor 74, and antenna substrate 75, and wires, yokes 51 and the like connected to these substrates) encased in the electric component case 69 and in the hood interior area A4 can be secured stably, as well as the water proof properties can be improved.

The first to third potting materials P1 to P3 will be described in further detail below. The first potting material P1 contains a UV absorbent or the like, for example, to suppress discoloring caused by UV. The first potting material P1 has a larger depth of penetration (according to JIS K-2235) than that of the second potting material P2 and the third potting material P3. This reduces the possibility of breaks of substrates such as the control substrate 73, monitor 74, antenna substrate 75 and the like.

In this embodiment, the second potting material P2 and third potting material P3 form a better bond with metals than the first potting material P1. Therefore, the second potting material P2 can bond well with the seeping water shielding portion 93D that is the metal core of the external connection cable 93, and the metal cord clip 66D. The third potting material P3 can bond well with the yokes 51, sensing electrodes 40 and the like.

In this embodiment, the first potting material P1 and third potting material P3 have a lower hardening temperature than that of the second potting material P2. Therefore, degradation of the battery 72 caused by the heat applied for setting the potting material can be prevented, as opposed to when the space surrounding the battery 72 is filled with the second potting material P2. The first potting material P1 and third potting material P3 should preferably be able to harden at 100°C or lower, and more preferably be able to harden at 80°C or lower. The first potting material P1 and third potting material P3 generate less heat when hardening than the second potting material P2. The possibility of battery 72 degradation is reduced in this regard, too.

In this embodiment, the second potting material P2 and third potting material P3 are both made of an epoxy resin, but they have following different properties: The third potting material P3 has lower viscosity before hardening than the second potting material P2. Therefore, the potting material can be readily poured into constricted parts inside the electric component case 69 which are the wire passage hole 65A and the wire passage hole 28E, or into intricate parts of the cross sleeve 25, as shown in FIG. 4. In this embodiment, the third potting material P3 can form better bond with the resin forming the hood part 66 (ABS resin in this embodiment) than the second potting material P2. Therefore, water penetration from the hood part 66 can be prevented more reliably.

As described above, in the electromagnetic flowmeter 10 of this embodiment, the interior of the electric component case 69 and the hood interior area A4 are filled with potting materials of appropriate types for each section.

The first to third potting materials P1 to P3 are poured in the following manner, for example. First, the constituent elements of the electric component case 69 (side caps 37, substrate case 60, and hood part 66), and electric components accommodated in the electric component case 69 (sensing electrodes 40, yokes 51, control substrate 73, monitor 74, wires 90 and the like) are assembled to the flow path housing 20. Next, with the substrate case 60 being disposed at the top (in the manner shown in FIG. 4), the third potting material P3 is poured from the hood part 66 up to a midway point of the substrate case 60 (more specifically, to the upper end of the lower accommodating part 60B), and hardened. After that, the electric component case 69 is put down on its side so that the opening of the hood part 66 faces upward. With the case lying on its side like this, the first potting material P1 is poured from the hood part 66 into the substrate case 60 (i.e., upper accommodating part 60A), and hardened. Next, with the case still lying sideways, the second potting material P2 is poured to the hood part 66 and hardened. The interior of the electric component case 69 and the hood interior area A4 are filled with the first to third potting materials P1 to P3 in this way. The lid member 70 can be attached to the substrate case 60 before the injection of the second potting material P2, and need not necessarily be attached when the first potting material P1 is poured and hardened. If this is the case, the first potting material P1 may be poured from an upper face opening 60W of the substrate case 60.

Thus, the interior of the electric component case 69 and the hood part 66 is filled with potting materials and the meter body 10H of the electromagnetic flowmeter 10 is finished. This electromagnetic flowmeter 10 is housed in the case 13 as mentioned in the beginning. The case 13 will now be described below.

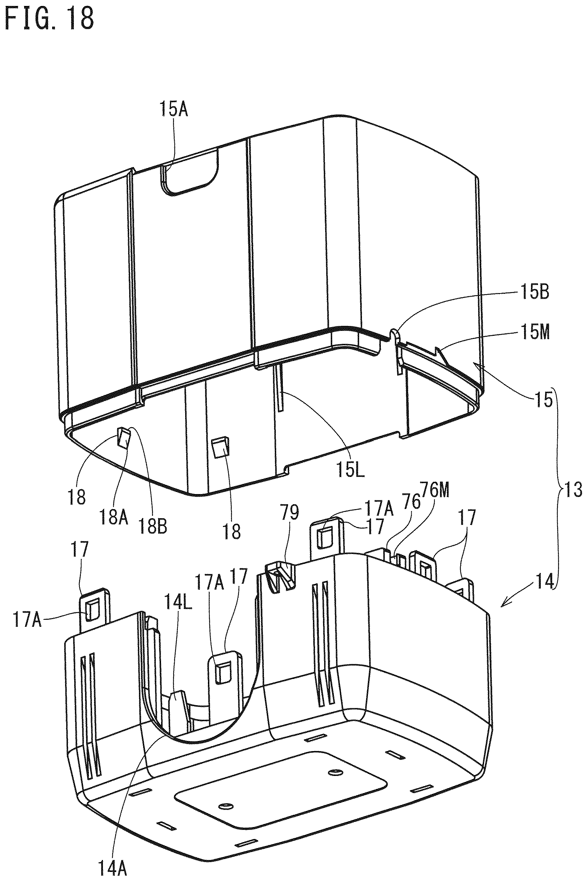

As shown in FIG. 18, the case 13 is made by an upper case 15 and a lower case 14. The upper case 15 and lower case 14 have a box shape, with their open sides facing each other. The control unit 10B, made up of the substrate case 60 and components accommodated therein, of the meter body 10H, is encased in the upper case 15, while the sensor unit 10A, made up of the parts below the substrate case 60, i.e., a middle part of the flow path housing 20 (i.e., part sandwiched by the pair of boundary flanges 24, 24) and components assembled thereto, of the meter body 10H, is encased in the lower case 14.

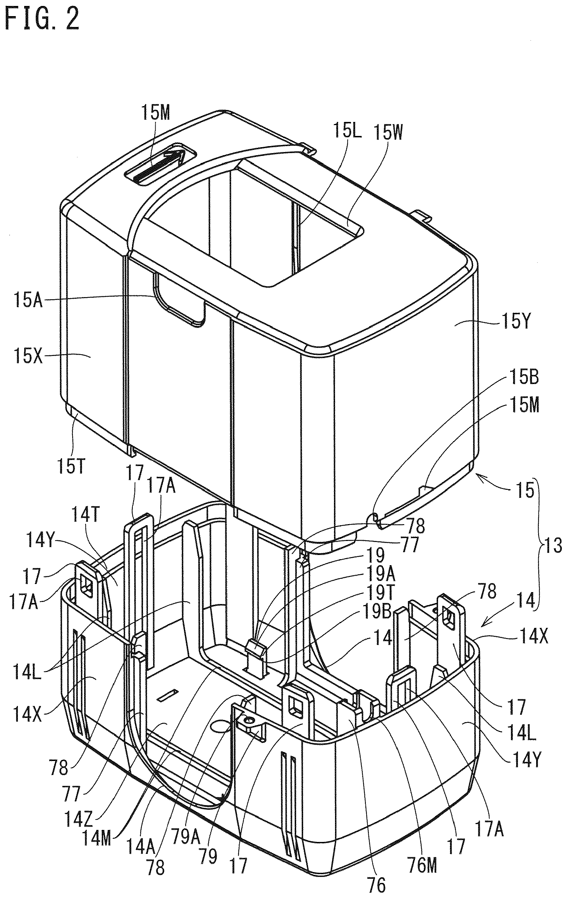

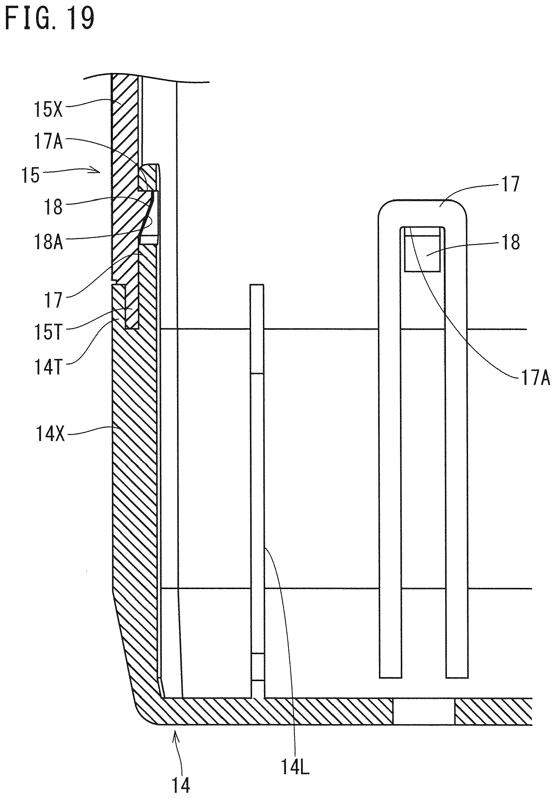

As shown in FIG. 2, the upper case 15 and lower case 14 have a horizontally long rectangular planar shape, the upper case 15 slightly larger in the up and down direction than the lower case 14. A stepped surface is formed on the inner face of the lower case 14 all around at a position close to the upper end, the part above this stepped surface having a slightly smaller thickness and serving as a case fitting part 14T. On the other hand, a stepped surface is formed on the outer face of the upper case 15 all around at a position close to the lower end, the part below this stepped surface having a slightly smaller thickness and serving as an inner fitting part 15T. As shown in FIG. 19, the inner fitting part 15T of the upper case 15 fits with the inside of the case fitting part 14T of the lower case 14.

The lower case 14 is provided with a pair of side wall slots 14A, 14A in the lateral center of a pair of long side walls 14X, 14X. The side wall slot 14A has a uniform width from the upper end to a position near the lower end, with a semicircular lower end part, corresponding to the boundary flange 24 of the flow path housing 20. A pair of first vertical ribs 78, 78 are provided on both sides of the side wall slot 14A on the inner surface of the long side wall 14X. The first vertical rib 78 extends entirely from the upper end to the lower end of the long side wall 14X, and is spaced from the case fitting part 14T. An upper end corner of the first vertical rib on the side facing the case fitting part 14T is chamfered.

Inner cover parts 77 in a square groove shape are formed at inner open edges of the side wall slots 14A on inner faces of the long side walls 14X. Both side portions of the inner cover part 77 are integrally provided with the pair of first vertical ribs 78, 78. Both side portions of the inner cover part 77 extend from the lower end of the long side wall 14X to a position near the case fitting part 14T, as well as extend from both sides of the side wall slot 14A inward of the side wall slot 14A. A bottom side portion of the inner cover part 77 extends such as to connect the lower ends of the pair of first vertical ribs 78, 78, and a middle portion thereof extends from a lower end portion of the side wall slot 14A inward of the side wall slot 14A.

The lower case 14 is provided with a pair of second vertical ribs 14L, 14L near both lateral ends of each of a pair of short side walls 14Y, 14Y. Similarly to the first vertical rib 78, the second vertical rib 14L extends entirely from the upper end to the lower end of the short side wall 14Y, and is spaced from the case fitting part 14T. An upper end corner is chamfered. The lower ends of the pairs of second vertical ribs 14L, 14L facing each other between the pair of short side walls 14Y, 14Y are connected by lateral ribs 14M protruding from a bottom wall 14Z.

On the bottom wall 14Z of the lower case 14 are provided two pairs of resilient holder pieces 19, 19 facing each other on both sides of the pair of lateral ribs 14M, 14M in the short side direction of the bottom wall 14Z, near the short side walls 14Y, 14Y. Each resilient holder piece 19 is provided with a locking protrusion 19T at an upper end portion on the side facing the other resilient holder piece.

A cable guide 76 is provided between one end portion of one short side wall 14Y and the second vertical rib 14L, which protrudes upward higher than the short side wall 14Y, with a cable groove 76M being provided in this protruded portion.

When the meter body 10H is accommodated in the lower case 14, the pair of boundary flanges 24, 24 of the flow path housing 20 fit in the side wall slots 14A, 14A of the lower case 14, and the main shield member 47 of the magnetic shield 47U is supported from below by the pair of lateral ribs 14M, 14M. The two pairs of second vertical ribs 14L set the main shield member 47 in position in the longitudinal direction of the lower case 14. The two pairs of resilient holder pieces 19 grip the bottom side part 47A of the main shield member 47, whereby the main shield member 47 is set in position in the short side direction of the lower case 14. The locking protrusions 19T of the resilient holder pieces 19 catch the bottom side part 47A from the side of the upper face to retain the main shield member 47 to the lower case 14. The inner cover parts 77 overlap outer edge portions of the boundary flanges 24 from inside so that gaps between the boundary flanges 24 and the lower case 14 are closed. The outer faces of the boundary flanges 24 and the outer faces of the long side walls 14X become flush with each other.

The external connection cables 93 of the meter body 10H fit in the cable groove 76M of the cable guide 76 and extend out of the lower case 14.

The state described above is achieved merely by pushing the meter body 10H down from above into the lower case 14, whereby the bottom side part 47A of the main shield member 47 slides on inclined surfaces 19A of the locking protrusions 19T to cause the group of resilient holder pieces 19 to undergo resilient deformation, which, when the meter body 10H is then pushed further to the bottom of the lower case 14, resiliently return to original shape so that locking surfaces 19B of the locking protrusions 19T catch the bottom side part 47A of the main shield member 47.

Resilient engaging pieces 17 are provided at both ends in the lateral direction of each long side wall 14X and at the lateral center of the short side wall 14Y of the lower case 14. The resilient engaging pieces 17 of the long side walls 14X are strip-shaped and extend in the up and down direction, overlapping the inner face of the long side wall 14X and protruding further beyond the long side wall 14X. There is a gap between the resilient engaging pieces 17 and the case fitting part 14T. Parts of the resilient engaging pieces 17 protruding beyond the long side walls 14X are provided with a rectangular through hole, inside of which serves as an engaging part 17A. The resilient engaging pieces 17 of the short side walls 14Y are structured the same as the resilient engaging pieces 17 of the long side walls 14X, with the lower part below the rectangular through hole being all removed.

As shown in FIG. 18, engaging protrusions 18 are provided on the inner face of the upper case 15 corresponding to the resilient engaging pieces 17. The engaging protrusion 18 includes an inclined surface 18A inclined relative to the up and down direction, and an engaging surface 18B that is horizontal at the upper end. When the upper case 15 is fitted from above to the lower case 14 in which the sensor unit 10A of the meter body 10H is accommodated, the group of resilient engaging pieces 17 all make sliding contact with the inclined surfaces 18A of the group of engaging protrusions 18 and resiliently deform inward in the course of the fitting. When the case fitting part 14T and the inner fitting part 15T fit with each other, the group of resilient engaging pieces 17 all ride over the group of engaging protrusions 18 and resiliently return so that, as shown in FIG. 19, the engaging protrusions 18 engage with the engaging parts 17A of the resilient engaging pieces 17, whereby the upper case 15 and lower case 14 are coupled together inseparably (i.e., undetachably fitted).

Other details of the structure of the case 13 are as follows: Namely, a notch 15B is provided to one short side wall 15Y of the upper case 15 corresponding to the cable groove 76M, so that a midway portion of the external connection cables 93 is received on the upper case 15. Two pairs of third vertical ribs 15L, 15L are provided on the long side walls 15X of the upper case 15 to reinforce the upper case 15. When the control unit 10B is accommodated in the upper case 15, the third vertical ribs 15L, 15L contact the meter body 10H. A rectangular upper face window 15W is provided in the upper face of the upper case 15 corresponding to the light transmitting part 70A of the lid member 70. A lid part 16 is rotatably attached to the upper part of the upper case 15 to close the upper face window 15W, as shown in FIG. 1. A hinge part 16H for the lid part 16 is provided at a lateral center of the long side wall 15X on the downstream side of the upper case 15 to allow the lid part 16 to rotate around the hinge part 16H to open. For facilitating the opening of the lid part 16, a recess 15A is provided at the upper end in the lateral center of the long side wall 15X on the upstream side (see FIG. 2). As shown in FIG. 3, engaging protrusions 15D protrude from the upper face of the upper case 15 downward. These engaging protrusions 15D engage with engaging recesses 26 provided in the upper face of the lid member 70. This way, the upper case 15 and the substrate case 60 can be united, and the upper case 15 is reinforced. The positions where the engaging protrusions 15D and engaging recesses 26 are disposed can also help prevent the upper case 15 from being assembled to the lower case 14 incorrectly inversely.

Wire retainers 79 are provided at the upper end of the long side walls 14X of the lower case 14 near the side wall slots 14A as shown in FIG. 2. The wire retainer 79 has a through hole 79A so that a wire (not shown) is passed through the through hole 79A and wound around the water pipe to fix the lower case 14 to the water pipe.

The structure of the electromagnetic flowmeter 10 of this embodiment is as has been described above. Next, the effects of this electromagnetic flowmeter 10 will be described. The electromagnetic flowmeter 10 is connected to a midway point of a water pipe to operate, to measure the flow rate of water flowing through the water pipe. The control substrate 73 supplies an alternating current to the coils 53C. Thereupon, a magnetic circuit is formed by the core shaft 51J, the pair of yokes 51, 51, and the measurement tube part 20P between the magnetic flux passing surfaces 51Z, 51Z of these yokes 51, 51, which applies magnetic fluxes (magnetic field) to the water flowing inside the measurement tube part 20P from directions intersecting the flow direction. The water between the sensing electrodes 40, 40, the sensing electrodes 40, 40, their wires 90, and the control substrate 73 together form a closed circuit 89 (see FIG. 20; hereinafter referred to as "closed measurement circuit 89"). When water flows inside the measurement tube part 20P, electromagnetic induction causes a potential difference to be induced between the distal end faces of the pair of sensing electrodes 40, 40 in the closed measurement circuit 89 in accordance with the flow speed of water inside the measurement tube part 20P. The control substrate 73 calculates a flow rate of water per unit time based on this potential difference and a cross-sectional area or the like of the measurement flow path 20R (i.e., measurement part 20K) inside the measurement tube part 20P, as well as obtains an integrated flow rate by integrating the flow rates. These calculation results are displayed on the monitor 74.

Changes in the magnetic flux intensity passing through the closed measurement circuit 89 may deteriorate the measurement precision as noises. In this embodiment, as shown in FIG. 9, the wire receiving groove 51E is formed on one of the yokes 51, where the wire 90 of one sensing electrode 40 is received and supported such as to extend toward the wire 90 of the other sensing electrode 40. This way, the wire 90 of one sensing electrode 40 and the path of electricity 89W formed by the water between both sensing electrodes 40, 40 both extend along the direction of the magnetic fluxes (up and down direction in FIG. 9), so that magnetic fluxes can hardy pass through the closed measurement circuit 89.

More particularly, since the wire receiving groove 51E is disposed within a reference surface S (cut section shown in FIG. 8 and FIG. 9) orthogonal to the yoke placement surfaces 34, 34 with both sensing electrodes 40, 40, the wire 90 of one sensing electrode 40 and the path of electricity 89W formed by the water between the sensing electrodes 40, 40 overlap each other along the magnetic flux direction, so that magnetic fluxes can be prevented from passing through the closed measurement circuit 89. Moreover, since both sensing electrodes 40, 40 have a rod-like shape and arranged along the same straight line, with the wire 90 of one sensing electrode 40 being received in the wire accommodating groove 33A and the wire receiving groove 52E extending on an extension line of the wire receiving groove 51E, magnetic fluxes can be prevented from passing through the closed measurement circuit 89 beside the magnetic flux passing surfaces 51Z, 51Z of the yokes 51, 51.

Also, since the wires 90, 90 of the sensing electrodes 40, 40 extend to the control substrate 73, both passing beside the yokes 51, 51 and being held side by side within the reference surface S, magnetic fluxes leaking sideways from the magnetic flux passing surfaces 51Z, 51Z are prevented from passing through the closed measurement circuit 89.

The pair of yokes 51, 51 are facing each other on both sides of the measurement tube part 20P, and the yoke placement surfaces 34, 34 and the magnetic flux passing surfaces 51Z, 51Z are flat. Thus, the magnetic fluxes are prevented from spreading sideways and can hardly pass through the closed measurement circuit 89 in this respect too. These contribute to suppression of noise in the closed measurement circuit 89, whereby the flow rate measurement precision can be improved.

The wires 90 having passed through the wire accommodating groove 33A and wire receiving groove 52E are passed through the wire passage holes 44A, 44A and supported in portions near bent parts on both sides, so that the wires 90 are set stably. The wire receiving groove 51E may be formed in the yoke placement surface 34 of the measurement tube part 20P, but, by forming the wire receiving groove in the magnetic flux passing surface 51Z (i.e., in the yoke 51), it is made easier to provide sufficient strength to the measurement tube part 20P.

Before the electromagnetic flowmeter 10 is attached to the water pipe, there is no water inside the measurement flow path 20R. Also, water may run out of the measurement flow path 20R during stoppage of water supply. Thus, there is a possibility of air entrapment in clearances between the sensing electrodes 40 and the electrode accommodating holes 35 when water flows into the measurement flow path 20R. More specifically, in conventional electromagnetic flowmeters, such clearances are minimized so as to reduce the volume for air entrapment as much as possible because of which water could hardly enter the clearances. Therefore, once air is entrapped in a clearance, it could hardly be removed, and this is considered to be causing deterioration in the measurement precision.

In the electromagnetic flowmeter 10 of this embodiment, as shown in FIG. 11(A), the submersion chamber 35H that accommodates the submersion distal-end part 40H of the sensing electrode 40 is provided at the end of each electrode accommodating hole 35, and each submersion chamber 35H has the outflow/inflow port 35A for allowing water to flow in or out in accordance with the presence or absence of water inside the measurement flow path 20R. Therefore, air that has entered the submersion chamber 35H can readily be removed.

More particularly, when water supply is started or restarted and water starts to flow through the measurement flow path 20R, water flows into the submersion chamber 35H from one end of the oval outflow/inflow port 35A, and pushes out the air inside the submersion chamber 35H from the other end of the oval outflow/inflow port 35A. Since the outflow/inflow port 35A is wide enough so that the entire length in the minor axis direction is 0.7 to 1 times the distance between curved surfaces 20G, 20G that are chamfered inner surfaces of the measurement flow path 20R, water can be taken into the submersion chamber 35H reliably. Since the hole protrusion 35W projects inwardly from an edge of the submersion chamber 35H on the side facing the measurement flow path 20R, and the inside of this hole protrusion 35W is the outflow/inflow port 35A, should the O-ring 36 be pulled toward the measurement flow path 20R, it is stopped from coming off toward the measurement flow path 20R. Moreover, the O-ring 36 is spaced away from the hole protrusion 35W so that the submersion chamber 35H is wider and allows water to readily flow into the submersion chamber 35H, and, even if air is slightly left inside the submersion chamber 35H, the air can be spaced away from the submersion distal-end part 40H of the sensing electrode 40 to make the submersion distal-end part 40H entirely submerged. By making the outflow/inflow port 35A oval, water can flow easily into the submersion chamber 35H, as well as detachment of the O-ring 36 is reliably prevented. The same effects can be achieved if the outflow/inflow port 35A is elliptic. Moreover, the major axis direction of the oval outflow/inflow port 35A is parallel to the axial direction of the measurement flow path 20R, i.e., the direction of water flow, so that the flow of water in the measurement flow path 20R can be utilized to readily introduce the water into the submersion chamber 35H. The widths h1 and h2 of the gaps between both ends in the minor axis direction of the outflow/inflow port 35A and the submersion distal-end part 40H may each be smaller than 0.2 mm. The widths d1 and d2 of the gaps between both ends in the major axis direction of the outflow/inflow port 35A and the submersion distal-end part 40H may each be smaller than 0.7 mm. The gaps between the outflow/inflow port 35A and the submersion distal-end part 40H only need to have a width large enough to allow the water to flow into the submersion chamber 35H from the outflow/inflow port 35A to cause the entire submersion distal-end part 40H to be immersed. The width h1 and the width h2 may be different from each other, or the same. The width d1 and the width d2 may be different from each other, or the same. The width of the smallest gap between the outflow/inflow port 35A and the submersion distal-end part 40H need not be 0.2 mm or more. If the width h1 and the width h2 are 0.2 mm each, and the widths d1 and d2 are 0.7 mm each as in this embodiment, water can readily flow into the submersion chamber 35H from the outflow/inflow port 35A.

Thus, in the electromagnetic flowmeter 10 of this embodiment, the submersion distal-end parts 40H, 40H of the pair of sensing electrodes 40, 40 are entirely immersed reliably so that there is little variation in the contact area between the sensing electrodes 40, 40 and water, whereby the measurement precision is improved.

The electromagnetic flowmeter 10 sends the measurement results of the flow rate of tap water with wireless signals in response to predetermined wireless signals from outside by near field radio communication.

Since the antenna substrate 75 in this electromagnetic flowmeter 10 has a ring-like structure, with the loop antenna 75T for near field radio communication printed thereon, the dead space around the monitor 74 can be utilized to increase the size of the loop antenna 75T, whereby the reception sensitivity of wireless communications can be increased without enlarging the substrate case 60. Since the control substrate 73 is spaced below from the antenna substrate 75, the influence of noise from the control substrate 73 on the antenna substrate 75 is suppressed. These ensure stable communications. The monitor 74 is held such as to be lifted up from the control substrate 73 and positioned close to the light transmitting part 70A of the lid member 70, so that the monitor 74 is favorably visible.

Simply providing the antenna substrate 75 separately from the control substrate 73 would increase the steps of assembling work and lead to increased production cost. According to the electromagnetic flowmeter 10 of this embodiment, a plurality of second poles 62 and third pole 61 are provided separately from the first pole 63 for fastening the control substrate 73 with screws, and their upper ends are thermally riveted to secure the antenna substrate 75, and moreover, positioning is achieved with these second poles 62 extending through the control substrate 73 and the antenna substrate 75. This way, the time-consuming screw tightening operation is decreased to reduce the production cost.

If the first pole 63 and second poles 62 stand upright from the bottom of the substrate case 60, the first pole 63 and others will be long, because the substrate case 60 accommodates the battery 72 below the control substrate 73, and the support could be unstable. According to the electromagnetic flowmeter 10 of this embodiment, a stepped surface 60D is provided on the inner surface of the substrate case 60 midway in the up and down direction, and the first to third poles 63, 62, and 61 stand upright from this stepped surface 60D. Therefore, the control substrate 73 and antenna substrate 75 are supported stably. Moreover, according to the electromagnetic flowmeter 10 of this embodiment, fastening of the substrate case 60 to the flow path housing 20 with screws and fastening of the control substrate 73 to the substrate case 60 with screws can be achieved at the same time in an efficient manner.

The entire electromagnetic flowmeter 10 except for both ends of the flow path housing 20 connected to the water pipe is housed in the case 13 that is formed by a combination of the upper case 15 and the lower case 14 (hereinafter referred to as "upper and lower cases 14 and 15" where appropriate). Since these upper and lower cases 14 and 15 are inseparable once joined together, meter tampering can be prevented more effectively as compared to the conventional one. To be made inseparable, the upper and lower cases 14 and 15 are configured such that resilient engaging pieces 17 provided to the lower case 14 undergo resilient deformation as they are inserted into the upper case 15 and return resiliently while the cases are joined, to mate with the engaging protrusions 18 on the inner face of the upper case 15 (i.e., undetachably fitted), which allows easy assembling operation of the electromagnetic flowmeter 10.

The resilient engaging pieces 17 stand upright away from the distal end of the inner surface of the lower case 14, and the inner fitting part 15T of the upper case 15 fits in between the case fitting part 14T of the lower case 14 and the resilient engaging pieces 17, as shown in FIG. 19. Therefore, when side walls of the upper case 15 are pushed or pulled, the resilient engaging pieces 17 move with the side walls of the upper case 15, so that the resilient engaging pieces 17 are reliably prevented from being disengaged. The plurality of first and second vertical ribs 14L and 78 that reinforce the long side walls 14X and short side walls 14Y of the lower case 14 are inserted inside the upper case 15, so that the upper and lower cases 14 and 15 are firm enough to prevent lateral displacement. The second vertical ribs 14L, 14L are connected by the lateral ribs 14M, so that these continuous second vertical ribs 14L, 14L and lateral ribs 14M can effectively reinforce the entire lower case 14.

The lower case 14 and upper case 15 have a quadrate top cross-sectional shape, with the resilient engaging pieces 17 being disposed on all the sides of the quadrate of the top cross section of the lower case 14, so that there is no gap between the side walls of any side of the upper and lower cases 14 and 15 and tampering can be reliably prevented. The lower case 14 may have lower strength in each side wall slot 14A, but the resilient engaging pieces 17 in pairs are arranged on both sides of the slot, so that any reduction in strength can be made up for by the engagement of the resilient engaging pieces 17.

The boundary flanges 24, 24 extending sideways from the flow path housing 20 fit into the side wall slots 14A, 14A of the lower case 14 to be flush with the outer surfaces and upper face of the lower case 14, which increases the integrality of the flow path housing 20 and the lower case 14 and improves the aesthetic appearance. Since these boundary flanges 24, 24 and side wall slots 14A have a circular arc shape in their lower end parts, stress concentration is prevented, which contributes to higher strength. The inner cover parts 77 of the lower case 14 overlap the edges of the boundary flanges 24, 24 from inside, which prevents creation of a gap for a tool or the like to be inserted in an unauthorized attempt.

The main shield member 47 and sub shield member 48 provide a magnetic shield that encircles the sensor unit 10A from four sides, so that a tampering attempt to induce a malfunction of the electromagnetic flowmeter 10 by applying a magnetic field from outside can be prevented. Both ends of the bottom side part of the main shield member 47 are held by two pairs of resilient holder pieces 19 standing upright from the bottom face of the lower case 14, the locking protrusion 19T of each resilient holder piece 19 catching the bottom side part of the main shield member 47 from above, so that the lower case 14 and the main shield member 47 are united and the lower case 14 is reinforced.

According to the electromagnetic flowmeter 10 of this embodiment, the metal sleeve 21 is secured in the flow path housing 20 by insert-molding the flow path housing 20, with male threads 21N for connection with a pipe being provided to this metal sleeve 21, so that a reduction in weight and an increase in strength can both be achieved.

When attaching the electromagnetic flowmeter 10 to a pipe, a tightening operation of a threaded component to the male threads 21N while keeping the case 13 of the electromagnetic flowmeter 10 fixed could apply a large torsional load on the electromagnetic flowmeter 10. In this embodiment, tool engagement parts 23 are provided close to both ends of the flow path housing 20, for a tool to engage therewith to stop the flow path housing 20 from rotating, so that application of a large torsional load on the electromagnetic flowmeter 10 can be prevented. Since the tool engagement parts 23 are integrally formed to the flow path housing 20, the provision of the tool engagement parts 23 does not cause an increase in the production cost or weight. Tool engagement parts 23 in a polygonal flange shape as in this embodiment may be provided with a recessed groove 23A that crosses a middle portion of the ridge line of each angular part of the polygon, so as to minimize deformation caused by "sink marks" during the resin molding of the flow path housing 20.

Since the cover flange 22F that covers the distal end face of the metal sleeve 21 is formed integrally with the flow path housing 20 in this embodiment, the flow path housing 20 is prevented from peeling from the inner face of the metal sleeve 21, i.e., the durability is improved. According to this embodiment, during the insert-molding of the flow path housing 20, outer edge portions of the distal end faces of the metal sleeve 21 are pressed against the metal mold, to prevent the molten resin from flowing toward the male threads 21N side of the metal sleeve 21. Since the outer edge portions of the distal end faces of the metal sleeve 21 are tapered, the metal sleeve 21 can be centered readily relative to the metal mold.

According to this embodiment, during the insert-molding of the flow path housing 20, outer circumferential surfaces of the large-diameter flanges 21C of the metal sleeve 21 are fitted with the metal mold, to prevent the molten resin from flowing toward the male threads 21N side of the metal sleeve 21. Since the outer edge portions of the distal end faces of the metal sleeve 21 are tapered, the metal sleeve 21 can be centered readily relative to the metal mold.

The small-diameter flange 21D and inner large-diameter part 21E provided to the metal sleeve 21 and covered by the resin that forms the flow path housing 20 further ensure the retention of the metal sleeve 21 to the flow path housing 20. The metal sleeve 21 has the recess/protrusion engagement part 21Q having recesses and protrusions alternately in the circumferential direction, which further ensures that the metal sleeve 21 is stopped from rotating relative to the flow path housing 20.

In this embodiment, the cross sleeve 25 reinforces a middle part of the flow path housing 20, and the cross sleeve 25 is reinforced at both ends by the pair of side caps 37, 37. The coils 53C and sensing electrodes 40 are protected by being accommodated in the cross sleeve 25.

In this embodiment, moreover, part of the flow path housing 20 sandwiched between the pair of yokes 51, 51 is reinforced by a pair of bridging walls 29B, 29B. Therefore, the part of the flow path housing 20 sandwiched between the pair of yokes 51, 51 can be made thin to increase the intensity of magnetic fields applied to the measurement flow path 20R inside, whereby the measurement precision can be increased. The plurality of horizontal ribs 29A extending sideways from the flow path housing 20 may be provided inside the cross sleeve 25 for further reinforcement, which will enable a further reduction of the thickness of the part of the flow path housing 20 sandwiched between the pair of yokes 51, 51.

In this embodiment, the reinforcing plates 28A, 28A at upper end and lower end are extended between the pair of boundary flanges 24, 24 that extend sideways from two points of the flow path housing 20 on both sides of the cross sleeve 25, and the plurality of reinforcing plates 28A are extended between the pair of boundary flanges 24, 24 and the cross sleeve 25, so that the entire middle part of the flow path housing 20 including the cross sleeve 25 is reinforced. In addition, the plurality of horizontal ribs 27A extend from side faces closer to both ends of the flow path housing 20 than the pair of boundary flanges 24, 24, so that the entire flow path housing 20 is reinforced.

In this embodiment, the part of the measurement flow path 20R subjected to magnetic fields from the coils 53C is surrounded from three sides by the main shield member 47 that is formed from a metal sheet bent into a U shape and magnetically shielded, so that a tampering attempt to induce a malfunction of the electromagnetic flowmeter 10 by applying a magnetic field from outside can be prevented. The cross sleeve 25 is also reinforced by the main shield member 47. With the addition of the sub shield member 48 having both ends overlapped on the pair of side parts of the main shield member 47, the magnetic shield and reinforcement are further strengthened.

The sensing electrodes, which require corrosion resistance to withstand the contact with water, have low wettability to solder or brazing metal because of the corrosion resistance. Therefore, if the pair of wires 90, 90 extending from the control substrate 73 were soldered to the pair of sensing electrodes 40, 40, the reliability of electrical connection would be low. If a metal working structure were adopted for the connecting part between the wire 90 and the sensing electrode 40, it would be hard to secure a sufficient contact area in the connected parts. The electromagnetic flowmeter 10 of this embodiment has a pair of wire connecting members 46, 46 made of a conductive material having higher wettability to solder or brazing metal than the sensing electrodes 40. The pair of wire connecting members 46, 46 and the pair of sensing electrodes 40, 40 are connected by press-fitting, and core wires of the pair of wires 90, 90 extending from the control substrate 73 to the pair of sensing electrodes 40, 40 are soldered or brazed to the pair of wire connecting members 46, 46, so that the reliability of electrical connection and corrosion resistance are both enhanced.

In the electromagnetic flowmeter 10 of this embodiment, the electrode case 25X, which surrounds at least part of the flow path housing 20 and accommodates the wire connecting members 46, 46, is filled with the potting material P, so that the surrounding parts of the wire connecting member 46 are protected from water. Since the wire connecting member 46 and the sensing electrode 40 are connected by press-fitting, the potting material P does not penetrate into a gap therebetween, and therefore a contact failure caused by penetration of the potting material P can be avoided.

The material forming the sensing electrodes 40 is stainless steel or the like, for example, and the material forming the wire connecting members 46 is copper or the like, for example. Sensing electrodes 40 provided with a corrosion proof surface by plating or the like may be used. The material for the sensing electrodes 40 should preferably be an austenite metal having no or little magnetism.

In this embodiment, the wire receiving groove 46M that receives the core wire of the wire 90 is formed to the wire connecting member 46, so that soldering or brazing can be performed easily, as molten solder or brazing metal can be poured into the wire receiving groove 46M. Since the end face of the thin rod portion 40D is flush with the bottom surface of the wire receiving groove 46M, there can hardly be a gap between the bottom surface of the wire receiving groove 46M and the core wire, so that the connection reliability is improved. In the electromagnetic flowmeter 10 of this embodiment, before the sensing electrode 40 is inserted into the electrode accommodating hole 35, the thin rod portion 40D of the sensing electrode 40 is passed through the electrode fixing member 42, and the wire connecting member 46 is press-fitted to the end of this thin rod portion 40D. As the sensing electrode 40, wire connecting member 46, and electrode fixing member 42 are united into one assembly, the assembling thereafter is facilitated.

In this embodiment, the resin electrode fixing member 42 that retains the sensing electrode 40 and the wire connecting member 46 are spaced away from each other, so that deformation of the electrode fixing member 42 that may be caused by the heat during soldering or brazing is prevented. In the electromagnetic flowmeter 10 of this embodiment, moreover, with the use of the wire receiving groove 45M or wire passage hole 44A, the wire 90 can be readily handled.

### (Other embodiments)

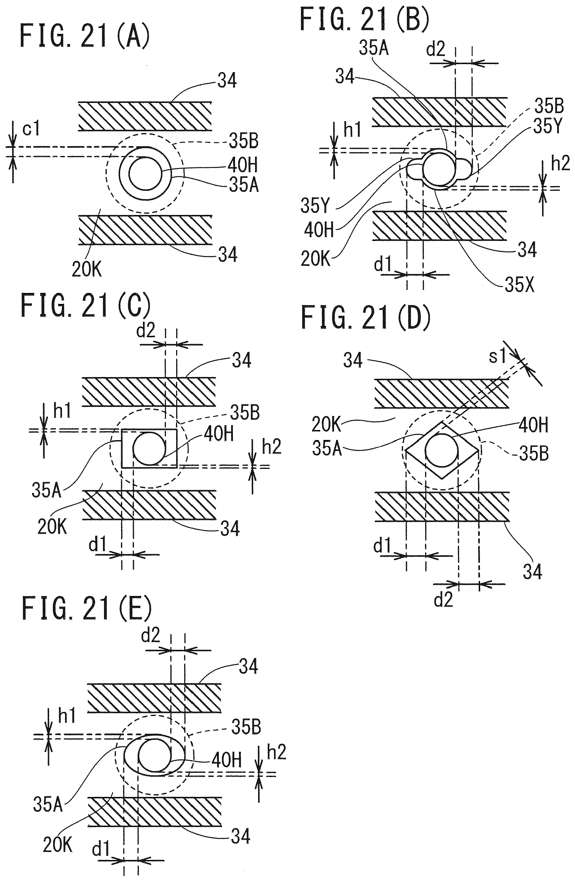

The present invention is not limited to the embodiment described above. For example, other embodiments as will be described below are also included in the technical scope of the present invention. Also, various other changes can be made in carrying out the invention without departing from the scope of the invention.
(1) While the outflow/inflow port 35A of the first embodiment described above is oval, it may be elliptic (see FIG. 21(E)), or circular as shown in FIG. 21(A). In the example in FIG. 21(A), the gap between the circular outflow/inflow port 35A and the submersion distal-end part 40H has a width c1 of 0.2 mm or more. The width c1 should preferably be 0.4 mm, for example. The width c1 should more preferably be 0.7 mm. The width c1 is not limited to the size specified above and may be set otherwise as long as water can flow into the submersion chamber 35H from the outflow/inflow port 35 so that the submersion distal-end part 40H can be entirely immersed in water. The outflow/inflow port 35A may also be a polygon that is elongated along the axial direction of the flow path housing 20, such as a rectangle shown in FIG. 21(C), or a rhomboid shown in FIG. 21(D), or, it may have a regular polygonal shape. The outflow/inflow port 35A may also have a polygonal shape that is elongated along a direction intersecting the axial direction of the flow path housing 20. The outflow/inflow port 35A may have a shape wherein, as shown in FIG. 21(B), extended parts 35Y, 35Y, which may be semicircular or the like, are formed at ends on the upstream side and downstream side of a circular opening 35X coaxial with the sensing electrode 40. In this case, the circular opening 35X may be configured to fit with the small-diameter distal end 40A of the sensing electrode 40, so that water flows into the submersion chamber 35H from the extended parts 35Y. The extended parts 35Y are not necessarily semicircular. They may be oval, or polygonal.

While the gaps between both ends in the longitudinal direction of the outflow/inflow port 35A and the submersion distal-end part 40H each have a width d1 or d2 of 0.7 mm or more in the examples shown in FIGS. 21(B) to 21(E), the gap may be smaller than 0.7 mm. While the gaps between both ends in the short side direction of the outflow/inflow port 35A and the submersion distal-end part 40H each have a width h1 or h2 of 0.2 mm or more in the examples shown in FIGS. 21(B) to 21(E), the gap may be smaller than 0.2 mm. In the example shown in FIG. 21(B), the widths d1, d2 of the gaps between both ends in the longitudinal direction of the outflow/inflow port 35A and the submersion distal-end part 40H correspond to the widths of the gaps between the upstream end and the downstream end of the extended parts 35Y, 35Y, and the submersion distal-end part 40H. In the example shown in FIG. 21(B), the widths h1, h2 of the gaps between both ends in the short side direction of the outflow/inflow port 35A and the submersion distal-end part 40H correspond to the widths of the gaps between the circular opening 35X and the submersion distal-end part 40H.

If the outflow/inflow port 35A has a shape elongated along the axial direction of the measurement flow path 20R and if the widths h1 and h2 of the gaps between both ends in the short side direction of the outflow/inflow port 35A and the submersion distal-end part 40H are 0.2 mm or more, for example, the widths d1, d2 of the gaps between both ends in the longitudinal direction of the outflow/inflow port 35A and the submersion distal-end part 40H will be greater than 0.2 mm, so that water can readily flow into the submersion chamber 35H from the outflow/inflow port 35A.

While the submersion distal-end part 40H is circular in cross section and disposed in the center of the outflow/inflow port 35A in the examples shown in FIGS. 21(A) to 21(E), the submersion distal-end part 40H need not necessarily be disposed in the center of the outflow/inflow port 35A. When the submersion distal-end part 40H is not disposed in the center of the outflow/inflow port 35A, the width h1 and the width h2 may be different from each other. The width d1 and width d2 may also be different from each other. When the outflow/inflow port 35A is circular and the submersion distal-end part 40H is not disposed in the center of the outflow/inflow port 35A, the smallest gap between the circular outflow/inflow port 35A and the submersion distal-end part 40H should preferably have a width c1 of 0.2 mm or more, and the largest gap between the circular outflow/inflow port 35A and the submersion distal-end part 40H should preferably have a width c1 of 0.7 mm or more. The width c1 of the smallest gap between the circular outflow/inflow port 35A and the submersion distal-end part 40H may be smaller than 0.2 mm, and the width c1 of the largest gap between the circular outflow/inflow port 35A and the submersion distal-end part 40H may be smaller than 0.7 mm

In the example shown in FIG. 21(C), the width s1 of the smallest gap between the rhomboidal outflow/inflow port 35A and the submersion distal-end part 40H equals to the width of the gap between a middle part of one side of the rhomboid and the submersion distal-end part 40H. The widths of the gaps between all four sides of the rhomboid and the submersion distal-end part 40H are the same in the example shown in FIG. 21(C), but they need not be the same. The width s1 should preferably be 0.2 mm or more, for example, but may be smaller than 0.2 mm. In the example shown in FIG. 21(C), the width s1 is 0.2 mm.

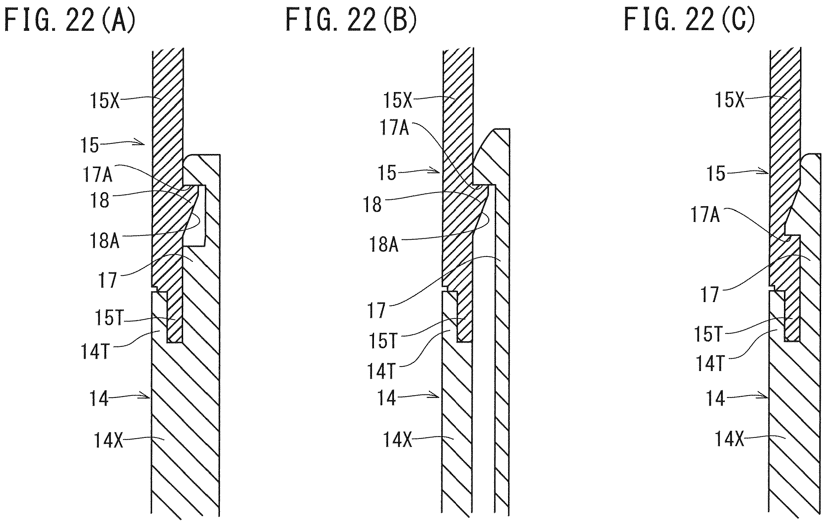

The outflow/inflow port 35A may have a shape different from the cross-sectional shape of the submersion distal-end part 40H, or they may be the same, as in the example shown in FIG. 21(A). When the outflow/inflow port 35A has a shape different from the cross-sectional shape of the submersion distal-end part 40H, water can readily enter the submersion chamber 35H through gaps formed between the outflow/inflow port 35A and the submersion distal-end part 40H. The outflow/inflow port 35A may have an opening area equal to the cross-sectional area of the submersion chamber 35H, or, the outflow/inflow port 35A may have a larger opening area than the cross-sectional area of the submersion chamber 35H.
(2) While the protrusion for preventing separation of the O-ring 36 is formed as the hole protrusion 35W in the first embodiment described above, there may be another protrusion separate from the hole protrusion 35W (for example between the hole protrusion 35W and the O-ring 36). While the hole protrusion 35W protrudes from the entire inner circumferential surface at the end of the submersion chamber 35H in the embodiment described above, the hole protrusion 35W may protrude from part of the inner circumferential surface at the end of the submersion chamber 35H. The position where the hole protrusion 35W is provided to the submersion chamber 35H is not necessarily at the end closer to the measurement flow path 20R and may be somewhere deeper than the end near the measurement flow path 20R. The hole protrusion 35W need not necessarily be provided to the submersion chamber 35H.
(3) While the control substrate 73 is fixed to the substrate case 60 with the substrate fixing screw 99 in the embodiment described above, the fixing may be achieved instead by providing a small-diameter part extending through the through hole 73B of the control substrate 73 at the upper end of the first pole 63 and by thermally riveting this small-diameter part, similarly to the third pole 61.
(4) In the embodiment described above, instead of using the first to third poles 63, 62, and 61, the control substrate 73 and antenna substrate 75 may be supported on protrusions projecting from the inner face of the upper accommodating part 60A of the substrate case 60, or on a stepped surface provided to the inner face of the upper accommodating part 60A of the substrate case 60 and facing upward.
(5) In the embodiment described above, the first pole 63 or third pole 61 may be provided in plural. There may be one second pole 62, or three or more second poles 62.
(6) While the resilient engaging pieces 17 are provided only to the lower case 14 and the engaging protrusions 18 are provided only to the upper case 15 in the embodiment described above, this structure may be inverted, i.e., the resilient engaging pieces 17 may be provided only to the upper case 15 and the engaging protrusions 18 may be provided only to the lower case 14. Alternatively, the resilient engaging pieces 17 and engaging protrusions 18 may both be provided to each of the lower case 14 and upper case 15.
(7) While the resilient engaging pieces 17 are provided on both of the long side walls 14X and short side walls 14Y of the lower case 14 in the embodiment described above, they may be provided only on the long side walls 14X, or only on the short side walls 14Y.
(8) In the embodiment described above, the resilient engaging piece 17 may have a recess instead of the through hole as shown in FIG. 22(A), the inside of this recess serving as the engaging part 17A. Alternatively, as shown in FIG. 22(B), the resilient engaging piece 17 may have a protrusion instead of the through hole, the lower face of this protrusion serving as the engaging part 17A. If this is the case, engaging protrusions 18 may be provided on the inner face of the upper case 15 as complementary parts to mate with the engaging parts 17A, or, recesses may be provided as shown in FIG. 22(C).
(9) While the boundary between the first potting material P1 and the third potting material P3 is positioned midway in the middle area A2 in the embodiment described above, the boundary may be located at the boundary between the upper area A3 and the middle area A2, or at the boundary between the middle area A2 and the lower area A1, or midway in the lower area A1.
(10) While the second potting material P2 and third potting material P3 are made of different types of epoxy resin in the embodiment described above, they may be of the same type.
(11) A different potting material made of a resin other than epoxy resin (for example, silicone resin) may be used instead of the third potting material P3 in the embodiment described above. In this case, the entire interior of the electric component case 69 may be filled with the first potting material P1, for example.
(12) The interior of the electric component case 69 may be filled with three or more types of potting materials separately in the up and down direction in the embodiment described above. For example, the upper area A3 may be filled with the first potting material P1, the lower area A1 may be filled with the third potting material P3, and the middle area A2 may be filled with a potting material that is different from the first potting material P1 and the third potting material P3.
(13) The electromagnetic flowmeter 10 in the embodiment described above may also be configured such that the interior of the electric component case 69 is not filled with the potting material P.
(14) While the tool engagement part 23 of the flow path housing 20 is made of resin in the embodiment described above, the tool engagement part may be formed of metal. If this is the case, the tool engagement part 23 may be attached to the resin component 22 by fitting therewith, or may be integrated with the resin component 22 by insert-molding.
(15) The tool engagement part 23 of the flow path housing 20 has a hexagonal cross section in the embodiment described above, but the shape is not limited to this. The tool engagement part may have other shapes as long as a tool used for connecting the flow path housing 20 to a water pipe can engage therewith. Examples of such shapes may include a recess or a protrusion for mating with the tool, for example.
(16) While the wire connecting member 46 has a through hole 46A as a portion where the sensing electrode 40 (more particularly, the thin rod portion 40D of the sensing electrode 40) is press-fitted in the embodiment described above, the wire connecting member may have a recess instead.
(17) While the wire connecting member 46 is secured to the sensing electrode 40 by press-fitting the sensing electrode 40 into the wire connecting member 46 in the embodiment described above, this may also be achieved by press-fitting the wire connecting member 46 into the sensing electrode 40. If this is the case, the sensing electrode 40 is provided with a hole or a recess for receiving the wire connecting member 46 press-fitted thereto.
(18) While the wire receiving groove 46M communicates with the through hole 46A of the wire connecting member 46 in the embodiment described above, they do not necessarily communicate with each other. The wire receiving groove 46M may be provided on an outer circumferential surface of the wire connecting member 46.
(19) While the wire connecting member 46 is provided with the wire receiving groove 46M in the embodiment described above, the wire connecting member 46 is not necessarily provided with the wire receiving groove 46M and may instead have a flat surface at one end.
(20) While the electrode fixing member 42 is made of resin in the embodiment described above, it may be made of metal. If this is the case, the electrode fixing member 42 may be adjacent to the wire connecting member 46.
(21) While a pair of yokes 51 are provided in the embodiment described above, there may be only one yoke 51 on the side having the wire receiving groove 51E.
(22) While the wire receiving groove 51E is provided to the yoke 51 in the embodiment described above, the groove may be provided to the measurement tube part 20P. If this is the case, another wire receiving groove 52E may be provided on an extension line of the wire receiving groove 51E in part of the flow path housing 20 opposite the yoke holder 52.
(23) While the magnetic flux passing surfaces 51Z are flat in the embodiment described above, they may be curved.
(24) While the wire receiving groove 51E of the yoke 51 is disposed within the reference surface S in the embodiment described above, the groove need not be disposed within the reference surface S. If this is the case, the wire receiving groove 51E of the yoke 51 should preferably be disposed along the reference surface S.
(25) While the control substrate 73 is disposed above the yoke 51 in the embodiment described above, the substrate may be disposed on one side of the yoke 51.
(26) While the sensing electrode 40 has a circular overall cross-sectional shape in the embodiment described above, the overall cross-sectional shape may be polygonal, oval, or elliptic. Only part of the sensing electrode 40 (for example, the small-diameter distal end 40A) may have a polygonal cross section, with the rest having a circular cross section.
(27) While the middle hole portion 35B of the electrode accommodating hole 35 has a circular cross section in the embodiment described above, the middle hole portion 35B may have a polygonal cross section.
(28) While the O-ring 36 is mounted as a seal member to the small-diameter distal end 40A of the sensing electrode 40 in the embodiment described above, a polygonal gasket may be mounted instead of the O-ring 36. Instead of using the O-ring 36, the electrode accommodating hole 35 may be filled with a sealant and sealed by the hardened sealant.
(29) While the outflow/inflow port 35A has an overall length in the major axis direction that is smaller than the inner diameter of the middle hole portion 35B in the embodiment described above, the length may be the same as the inner diameter of the middle hole portion 35B.
(30) While the submersion distal-end part 40H is positioned in the center of the outflow/inflow port 35A in the embodiment described above, the submersion distal-end part may be displaced from the center to one side of the outflow/inflow port 35A.
(31) While the major axis direction of the outflow/inflow port 35A is parallel to the axial direction of the measurement flow path 20R in the embodiment described above, the major axis direction of the outflow/inflow port 35A may intersect with the axial direction of the measurement flow path 20R.
(32) While the measurement flow path 20R is gradually reduced in diameter from both ends toward the central part in the embodiment described above, the path may have a constant diameter from both ends to the central part, or may be gradually increased in diameter from both ends toward the central part.
(33) While the distal end face of the small-diameter distal end 40A is flush with the inner face of the measurement flow path 20R in the embodiment described above, the distal end face of the small-diameter distal end 40A need not necessarily be flush with the inner face of the measurement flow path 20R.

### <Note>

Of the plurality of constituent elements set forth in the claims, those that have different names from those of the corresponding parts in the embodiments described above have the following correspondence:
Seal member: O-ring 36

### DESCRIPTION OF REFERENCE NUMERALS

- 10: Electromagnetic flowmeter
- 13: Case
- 14: Lower case
- 15: Upper case
- 17: Resilient engaging piece
- 18: Engaging protrusion
- 20: Flow path housing
- 20R: Measurement flow path
- 35: Electrode accommodating hole
- 35A: Outflow/inflow port
- 35H: Submersion chamber
- 35W: Hole protrusion
- 36: O-ring
- 40: Sensing electrode
- 40H: Submersion distal-end part
- 51: Yoke
- 60: Substrate case
- 70A: Light transmitting part
- 73: Control substrate
- 74: Monitor
- 75: Antenna substrate
- 75M: Window part
- 75T: Loop antenna
- P1: First potting material
- P2: Second potting material
- P3: Third potting material

## Claims

1. An electromagnetic flowmeter comprising:
a flow path housing having a measurement flow path in which water flows under a magnetic field;
a pair of electrode accommodating holes formed in the flow path housing and communicating with the measurement flow path in a direction intersecting the magnetic field;
a pair of sensing electrodes fitted in the pair of electrode accommodating holes to detect a potential difference between two points inside the measurement flow path;
a seal member providing a seal between an inner surface of each of the electrode accommodating holes and an outer surface of each of the sensing electrodes;
a submersion distal-end part of each of the sensing electrodes located closer to the measurement flow path than the seal member;
a pair of submersion chambers that are parts of the pair of electrode accommodating holes each located closer to the measurement flow path than the seal member and accommodating the submersion distal-end part; and
an outflow/inflow port provided in each of the submersion chambers such as to open to an inner face of the measurement flow path and allowing water to flow in and out in accordance with presence and absence of water inside the measurement flow path, so that the submersion distal-end part is entirely immersed in water inside the submersion chamber when the measurement flow path is filled with water.

2. The electromagnetic flowmeter according to claim 1, further comprising:
an O-ring as the seal member; and
a hole protrusion projecting inward from an edge of the submersion chamber on a side facing the measurement flow path and having the outflow/inflow port inside.

3. The electromagnetic flowmeter according to claim 2, wherein the O-ring is spaced away from the hole protrusion.

4. The electromagnetic flowmeter according to claim 3, wherein
the outflow/inflow port is oval or elliptic,
the submersion chamber has a circular cross section with a diameter larger than an entire length in a major axis direction of the outflow/inflow port, and
the submersion distal-end part has a circular cross section with a diameter smaller than an entire length in a minor axis direction of the outflow/inflow port, and is arranged in a center of the outflow/inflow port.

5. The electromagnetic flowmeter according to claim 4, wherein the oval or the elliptic shape has a major axis direction parallel to an axial direction of the measurement flow path.

6. The electromagnetic flowmeter according to claim 5, wherein
there is a gap with a width of 0.2 mm or more between both ends in the minor axis direction of the outflow/inflow port and the submersion distal-end part, and
there is a gap with a width of 0.7 mm or more between both ends in the major axis direction of the outflow/inflow port and the submersion distal-end part.

7. The electromagnetic flowmeter according to claim 6, wherein
the measurement flow path including the pair of submersion chambers has a rectangular cross-sectional shape with four corners thereof being rounded, and
the entire length in the minor axis direction of the outflow/inflow port is 0.7 to 1 times a distance between rounded curved surfaces of inner faces of the measurement flow path.

8. The electromagnetic flowmeter according to any one of claims 1 to 7, wherein there is a gap with a width of 0.2 mm or more between the outflow/inflow port and the submersion distal-end part.

9. The electromagnetic flowmeter according to any one of claims 1 to 8, wherein
the outflow/inflow port has a shape elongated in an axial direction of the measurement flow path, and
there is a gap with a width of 0.2 mm or more between both ends in a short side direction of the outflow/inflow port and the submersion distal-end part.

10. The electromagnetic flowmeter according to any one of claims 1 to 9, wherein
the outflow/inflow port has a shape elongated in the axial direction of the measurement flow path, and
there is a gap with a width of 0.7 mm or more between both ends in a longitudinal direction of the outflow/inflow port and the submersion distal-end part.

11. The electromagnetic flowmeter according to claim 8, wherein
the outflow/inflow port is circular,
the submersion chamber has a circular cross section larger than the outflow/inflow port, and
the submersion distal-end part has a circular cross section and is arranged in a center of the outflow/inflow port.

12. The electromagnetic flowmeter according to claim 9 or 10, wherein
the outflow/inflow port is polygonal,
the submersion chamber has a circular cross section larger than the outflow/inflow port, and
the submersion distal-end part has a circular cross section and is arranged in the center of the outflow/inflow port.

13. The electromagnetic flowmeter according to claim 10, wherein
the outflow/inflow port includes a circular opening with a circular cross section, and extended parts extended respectively from an upstream end and a downstream end of the circular opening, and
the submersion distal-end part has a circular cross section and is arranged in a center of the circular opening.
